# EUROPEAN PATENT SPECIFICATION

(11) **EP 3 602 674 B1**
(45) Date of publication and mention of the grant of the patent: **25.11.2026**
(21) Application number: 18772396.0
(22) Date of filing: 23.03.2018
(51) Int. Cl.: H01M 10/052, H01M 10/42, H01M 10/48, H01M 50/204, H01M 50/543, H01M 50/55, H01M 50/557, H01M 50/562, H02J 7/00, H02J 7/44, H02J 7/90, H01M 10/44, H01M 50/572

(54) **TERMINAL CONFIGURATION FOR A BATTERY PACK**
ANSCHLUSSKONFIGURATION FÜR EIN BATTERIEPACK
CONFIGURATION DE TERMINAL POUR BLOC-BATTERIE

(30) Priority: 24.03.2017 US 201762475951 P
(43) Date of publication of application: 05.02.2020
(60) Divisional application: 21171184.1 / 3 913 723; 21171192.4 / 3 913 733
(73) Proprietor: Milwaukee Electric Tool Corporation, Brookfield, WI 53005 (US)
(72) Inventor: BROZEK, Jeffrey M., Mequon, WI 53092 (US); TRUETTNER, Donald J., Waukesha, WI 53188 (US); LAMONT, Lance D., Brookfield, WI 53005 (US); STAMPFL, Burtrom L., Brookfield, WI 53005 (US); OBERMANN, Timothy R., Waukesha, WI 53186 (US); MERGENER, Matthew J., Mequon, WI 53097 (US); HAMIDI, Seyed A., Milwaukee, WI 53211 (US); ZIMMERMAN, Jacob N., Pewaukee, WI 53072 (US); RADOVICH, Kyle J., West Bend 53095 (US)
(74) Representative: Marks & Clerk LLP
(86) International application number: PCT/US2018/024172
(87) International publication number: WO 2018/175983

(56) References cited:
- EP-A1- 3 059 781
- EP-A2- 1 780 867
- KR-A- 20120 016 993
- KR-A- 20140 096 600
- KR-B1- 101 686 018
- US-A1- 2006 091 858
- US-A1- 2013 106 343
- US-A1- 2015 288 219

## Description

### RELATED APPLICATION

The present application claims priority to co-pending U.S. Provisional Patent Application No. 62/475,951, filed March 24, 2017.

### FIELD

The present invention relates to battery packs and electrical devices connectable to battery packs and, more particularly, to a terminal configuration for a battery pack and/or an electrical device.

According to its abstract, US 2006/091858 A1 describes a method of conducting an operation including a battery. The battery includes a cell having a voltage. Power is transferable between the cell and the electrical device. A controller is operable to control a function of the battery pack. The controller is also operable with a voltage at least one of equal to and greater than an operating voltage threshold. The cell is operable to selectively supply voltage to the controller. The method includes the act of enabling the controller to operate when the voltage supplied by the cell is below the operating voltage threshold.

### SUMMARY

Aspects of the present invention are defined by the appended independent claims. Preferred embodiments of the present invention are defined by the appended dependent claims.

Tools, such as power tools (e.g., drills, drivers, saws, etc.), outdoor tools (e.g., blowers, trimmers, etc.), etc., and other electrical devices (e.g., motorized devices, non-motorized devices, chargers, etc.) (generally referred to herein as "devices" or a "device") may transfer power (e.g., be powered by, supply power to) with rechargeable battery packs. The battery pack may be detached from a device for charging or for use with other devices. In many cases, battery packs are designed such that the same battery pack may be used with many kinds of devices.

Battery packs include a number of battery cells (for example, Li-ion, NiCd, NiMH, etc.) connected in a series configuration, a parallel configuration, or a combination thereof. Power terminals are connected to the battery cells. When a battery pack is connected to a device, the power terminals of the battery pack are connected to corresponding power terminals of the device, and the battery pack provides operating power to the device through the power terminals.

Many electrical devices include a controller to monitor and control operation (e.g., motor speed, torque output, etc.) of the device. Similarly, many battery packs include a controller to monitor and control operation (e.g., charging and discharging operations, display state-of-charge, etc.).

While the device controller and the battery pack controller generally operate independently of each other, communication between the controllers may be advantageous. For example, the controllers may communicate to adjust operation based on a characteristic of the device and/or of the battery pack. As another example, the device controller may communicate with the battery pack controller to authenticate the battery pack, thereby improving the operation and security of the devices.

In some implementations, the power terminals may be used to provide communication between the device controller and the battery pack controller. However, this may result in noise being generated on the communication line between the controllers. In addition, the amount of information that may be exchanged may be limited by the number of terminals. Accordingly, separate communication terminals that are isolated from the power terminals may be needed to provide a low-noise communication line with sufficient information capacity between the device controller and the battery pack controller.

In addition, the power received from the battery pack is used to power both the load (e.g., the motor) and the device controller. While controllers used in electrical devices generally have low power requirements, they do consume power. As such, the device controller may be put into a sleep mode to avoid unnecessarily draining the battery pack to constantly power the device controller.

Electrical device controllers also generally have low power capacity. For example, a device load (e.g., a motor) may operate in a range of 25-35 Amps (A) or more. In contrast, a device controller may operate at well under 1 A. When initiating operation of an electrical device, it may be desirable to provide low power to "wake-up" the device controller before the full voltage of the battery pack is provided to power the electrical device.

In some implementations, a separate dedicated battery (e.g., a coin cell) may be used to power low power functions of the electrical device or the battery pack. The dedicated battery may be used separately from the battery pack to power the device controller. However, such a dedicated battery adds a separate non-chargeable or non-replaceable component to the electrical device.

In other implementations, low power may be provided to the electrical device through a low-power circuit connected across a single battery of the battery pack. However, this may result in cell balancing issues, as one battery cell (the "low-power cell") is drained more often than the other battery cells in the battery pack, reducing the service life of the battery pack. In order to avoid these issues, the single cell low power application may be limited to very low power and infrequent operations.

Accordingly, a relatively low-power power source may be needed to power recurring low power functions of the electrical device without incurring performance or service life issues (e.g., due to cell imbalances) or adding additional non-chargeable, non-replaceable components to the battery pack or electrical device. A low-power power supply may be advantageous in powering other low-power components of an electrical device, such as an indicator/LED, a communication module, etc.

In one independent aspect, a battery pack may generally include a housing; a plurality of battery cells supported by the housing; a plurality of terminals including a positive power terminal, a negative power terminal, and a low power terminal; a low power circuit connecting the plurality of battery cells to the low power terminal and the negative terminal to output a first voltage; and a power circuit connecting the plurality of battery cells to the positive power terminal and the negative terminal to output a second voltage, the second voltage being greater than the first voltage (e.g., 80 V compared to 5 V).

In some implementations, the low power circuit may include a transformer (e.g., a step down transformer or a low dropout regulator (LDO)). In some implementations, the battery pack may include a controller operable to control the battery pack to selectively output the first voltage and the second voltage.

In another independent aspect, a method of operating a battery-powered device with a battery pack may be provided. The device may include a device housing, a load supported by the device housing, and a device controller supported by the device housing. The battery pack may include a pack housing, and a plurality of battery cells supported by the housing. The method may generally include supplying a first voltage from the plurality of battery cells to the device to power the device controller; and supplying a second voltage from the plurality of battery cells to the device to power the device. Supplying a first voltage may include, with a transformer (e.g., a step down transformer or a low dropout regulator (LDO)), reducing a voltage of the plurality of battery cells to the first voltage.

In yet another independent aspect, a battery pack may generally include a housing; a plurality of battery cells supported by the housing; a controller; and a plurality of terminals including a positive power terminal, a negative power terminal and a communication terminal, the communication terminal being electrically connected to the controller and operable to communicate between the controller and an external device, the communication terminal being isolated from the positive power terminal and the negative power terminal.

In some implementations, the housing may include a terminal block supporting the plurality of terminals, the positive power terminal and the negative terminal being arranged in a first row, the communication terminal being arranged in a second row spaced from the first row.

In a further independent aspect, an electrical combination may generally include an electrical device including a device housing, a load supported by the device housing, a device controller supported by the device housing, and a plurality of device terminals including a device positive power terminal, a device negative terminal, and a device low power terminal; and a battery pack including a pack housing; a plurality of battery cells supported by the pack housing, a plurality of pack terminals including a pack positive power terminal electrically connectable to the device positive power terminal, a pack negative power terminal electrically connectable to the device negative terminal, and a pack low power terminal electrically connectable to the device low power terminal, a low power circuit connecting the plurality of battery cells to the low power terminal and the pack negative terminal to output a first voltage to power the device controller, and a power circuit connecting the plurality of battery cells to the pack positive power terminal and the pack negative terminal to output a second voltage to power the load, the second voltage being greater than the first voltage.

In another independent aspect, a terminal for one of a battery pack and an electrical device electrically connectable to the battery pack along an axis may be provided. The terminal may generally include a terminal blade extending along the axis and having opposite axially-extending faces connected by opposite axially-extending edges; and a terminal support portion extending transverse to the axis and beyond an associated face.

In some implementations, the terminal support portion may include a transverse wing connected to one edge. In some implementations, the support portion includes at least one rib on the associated face.

In yet another independent aspect, a terminal block for one of a battery pack and an electrical device electrically connectable to the battery pack along an axis may be provided. The terminal block may generally include a housing; and a plurality of terminals including a positive power terminal and a ground terminal, at least one terminal including a terminal blade extending along the axis and having opposite axially-extending faces connected by opposite axially-extending edges, and a terminal support portion extending transverse to the axis and beyond an associated face.

In a further independent aspect, an electrical combination may generally include a battery pack including a pack housing, a plurality of battery cells supported by the pack housing, and a pack terminal electrically connected to the battery cells; and an electrical device including a device housing, a circuit supported by the device housing, and a device terminal electrically connected to the circuit and electrically connectable to the pack terminal to electrically connect the circuit to one or more battery cells; one of the pack terminal and the device terminal including a terminal blade extending along the axis and having opposite axially-extending faces connected by opposite axially-extending edges, and a terminal support portion extending transverse to the axis and beyond an associated face.

Other independent aspects may become apparent by consideration of the detailed description, claims and accompanying drawings.

### BRIEF DESCRIPTION OF THE DRAWINGS

FIG. 1 is a perspective view of a battery pack.
FIG. 2 is a plan view of a terminal block of the battery pack of FIG. 1.
FIG. 3 is a block diagram of the battery pack of FIG. 1.
FIG. 4 is a circuit diagram of a low-current supply circuit of a low-power circuit of the battery pack of FIG. 1.
FIG. 5 is a block diagram of a voltage regulator of the low-current supply circuit of FIG. 4.
FIG. 6 is a circuit diagram of a low-current supply circuit of a low-power circuit of the battery pack of FIG. 1.
FIG. 7 is a block diagram of a high-current supply circuit of a low-power circuit of the battery pack of FIG. 1.
FIG. 8 is a circuit diagram of a startup circuit of the high-current supply circuit of FIG. 7.
FIG. 9 is a plan view of a terminal block of an electrical device.
FIG. 10 is a block diagram of the electrical device.
FIG. 11 is a plan view of a terminal block of a charger.
FIG. 12 is a block diagram of the charger.
FIG. 13 is a flowchart illustrating a quick re-authentication process between a battery pack and an electrical device.
FIG. 14 is a flowchart illustrating a transmitter function of a battery transceiver of the battery pack of FIG. 1.
FIG. 15 is a flowchart illustrating a receiver function of a battery transceiver of the battery pack of FIG. 1.
FIG. 16 is an isometric view of a terminal block of an electrical device.
FIG. 17 is an isometric view of a terminal block of the battery pack of FIG. 1.
FIG. 18 is an isometric view of a terminal block of an electrical device.
FIG. 19 is a perspective view of a connection between the terminal block of the power of FIG. 18 with a terminal block of the battery pack of FIG. 1.
FIG. 20 is a perspective view of a connection between the terminal block of the power of FIG. 18 with a terminal block of the battery pack of FIG. 1.
FIG. 21 is a perspective view of a terminal block portion of an electrical device.
FIG. 22 is another perspective view of the terminal block portion of FIG. 21.
FIG. 23 is an isometric view of a terminal block of an electrical device.
FIG. 24 is a perspective view of a portion of an electrical device.
FIG. 25 is a side view of the portion of the electrical device as shown in FIG. 24.
FIG. 26 is a perspective view of power terminals shown in FIG. 24.

### DETAILED DESCRIPTION

Before any independent embodiments of the invention are explained in detail, it is to be understood that the invention is not limited in its application to the details of construction and the arrangement of components set forth in the following description or illustrated in the following drawings. The invention is capable of other independent embodiments and of being practiced or of being carried out in various ways. Also, it is to be understood that the phraseology and terminology used herein are for the purpose of description and should not be regarded as limiting.

The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Also, the functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way but may also be configured in ways that are not listed.

Furthermore, some embodiments described herein may include one or more electronic processors configured to perform the described functionality by executing instructions stored in non-transitory, computer-readable medium. Similarly, embodiments described herein may be implemented as non-transitory, computer-readable medium storing instructions executable by one or more electronic processors to perform the described functionality. As used in the present application, "non-transitory computer-readable medium" comprises all computer-readable media but does not consist of a transitory, propagating signal. Accordingly, non-transitory computer-readable medium may include, for example, a hard disk, a CD-ROM, an optical storage device, a magnetic storage device, a ROM (Read Only Memory), a RAM (Random Access Memory), register memory, a processor cache, or any combination thereof.

Many of the modules and logical structures described are capable of being implemented in software executed by a microprocessor or a similar device or of being implemented in hardware using a variety of components including, for example, application specific integrated circuits ("ASICs"). Terms like "controller" and "module" may include or refer to both hardware and/or software. Capitalized terms conform to common practices and help correlate the description with the coding examples, equations, and/or drawings. However, no specific meaning is implied or should be inferred simply due to the use of capitalization. Thus, the claims should not be limited to the specific examples or terminology or to any specific hardware or software implementation or combination of software or hardware.

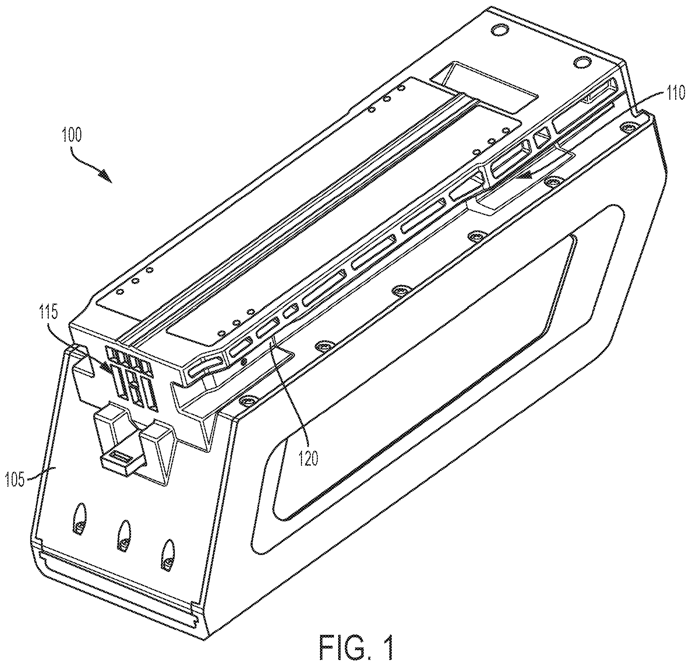

As shown in FIG. 1, a battery pack 100 includes a housing 105 with a support portion 110 and a terminal block 115. The housing 105 encloses components of the battery pack 100 including battery cells, a battery controller, etc. The support portion 110 provides a slide-on arrangement with a projection/recess 120 cooperating with a complementary recess/projection (not shown) of an electrical device (e.g., a power tool, an outdoor tool, etc.) or other electrical device (again, generally referred to herein as "devices" or a "device") to mechanically connect the battery pack 100 and the device.

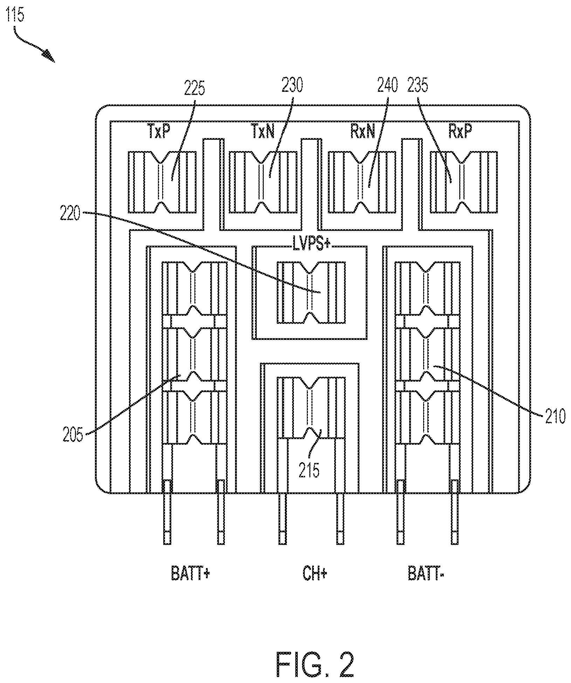

With reference to FIG. 2, the terminal block 115 is operable to electrically connect the battery pack 100 and the electrical device and, as illustrated, includes a positive battery terminal 205, a ground terminal 210, a charger terminal 215, a low-power terminal 220, a positive transmission terminal 225, a negative transmission terminal 230, a positive receiver terminal 235, and a negative receiver terminal 240. The positive battery terminal 205 and the ground terminal 210 are connectable to power terminals of an electrical device, and provide a main discharging current for the operation of the electrical device. The charger terminal 215 and the ground terminal 210 are connected to charging terminals of a charger and receive charging current to charge the battery cells of the battery pack 100.

The ground terminal 210 may form a common reference between the battery pack 100 and the connected electrical device. The low-power terminal 220 provides a low-power voltage supply to the electrical device to power certain functions of the electrical device. For example, the low-power voltage supply may be used to power a device controller, indicators (e.g., LEDs), a communication module, etc. of the electrical device.

The positive transmission terminal 225, the negative transmission terminal 230, the positive receiver terminal 235, and the negative receiver terminal 240 may together be referred to as "communication terminals" of the battery pack 100. The communication terminals allow for differential communication between the battery pack 100 and a connected electrical device or charger. The illustrated communication terminals are only used to either receive or transmit data but not both. In other embodiments, the communication terminals follow a full-duplex standard (for example, RS485 standard).

In the illustrated construction, the communication terminals 225, 230, 235, 240 are isolated from the power terminals 205, 210, 215, 220 to provide a low-noise communication line. The communication terminals 225, 230, 235, 240 provide sufficient information capacity between the device controller and the battery pack controller.

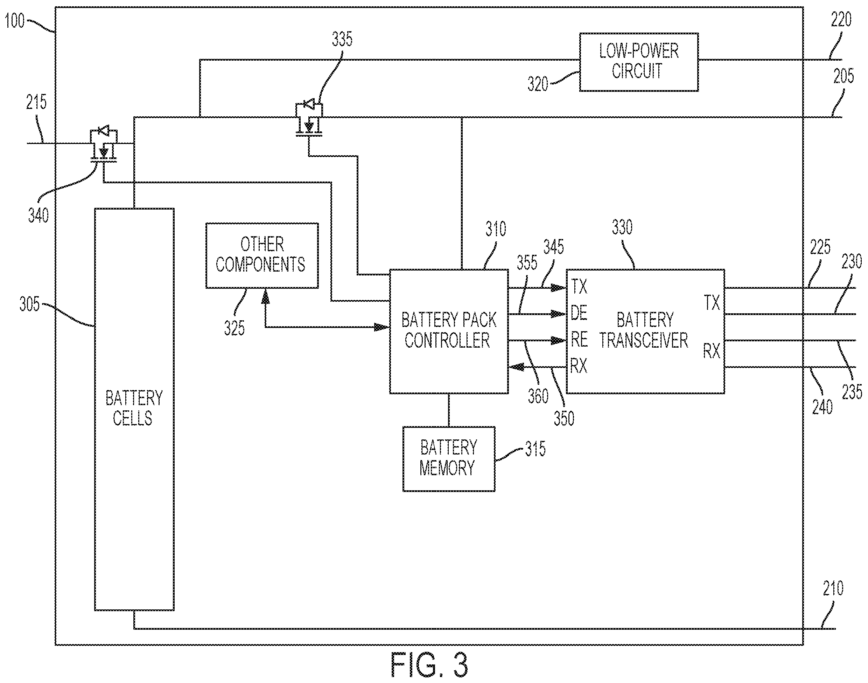

FIG. 3 is a simplified block diagram of the battery pack 100. The battery pack 100 includes battery cells 305, a battery controller 310, a battery memory 315, a low-power circuit 320, other components 325, and a battery transceiver 330. The battery cells 305 may be any rechargeable battery cell chemistry type, such as, for example, nickel-cadmium (NiCd), nickel-metal hydride (NiMH), Lithium (Li), Lithium-ion (Li-ion), other lithium-based chemistry, etc. In some embodiments, the battery pack 100 may include two or more battery cell strings connected in parallel, each having a number (e.g., five or more) of battery cells connected in series to provide a desired discharge output (e.g., nominal voltage (e.g., 20 V, 40 V, 60 V, 80 V, 120 V) and current capacity). In other embodiments, other configurations of battery cells 305 are also possible.

In some embodiments, the battery controller 310 may be implemented as a microprocessor with a separate memory, such as the battery memory 315. In other embodiments, the battery controller 310 may be implemented as a microcontroller (with battery memory 315 on the same chip). In other embodiments, the battery controller 310 may be implemented using multiple processors. In addition, the battery controller 310 may be implemented partially or entirely as, for example, a field programmable gate array (FPGA), an application specific integrated circuit (ASIC), etc., and the battery memory 315 may not be needed or be modified accordingly.

In the example illustrated, the battery memory 315 includes non-transitory, computer-readable memory that stores instructions received and executed by the battery controller 310 to carry out functionality of the battery pack 100. The battery memory 315 may include, for example, a program storage area and a data storage area. The program storage area and the data storage area may include combinations of different types of memory, such as read-only memory and random-access memory.

In some embodiments, a discharging switch 335 is connected between the battery cells 305 and the positive battery terminal 205. The battery controller 310 is operable to control (e.g., open and close) the discharging switch 335 to control discharge of the battery cells 305. In some embodiments, a charging switch 340 may also be connected between the battery cells 305 and the charger terminal 215. The battery controller 310 is operable to control (e.g., open and close) the charging switch 340 to control charging of the battery cells 305.

The discharging switch 335 and the charging switch 340 may be implemented using bi-polar unction transistors, field-effect-transistors (FETs), etc. In some embodiments, the discharging switch 335 and the charging switch 340 may be connected on the ground-side of the battery cells 305 between the battery cells 305 and the ground terminal 210. In some embodiments (not shown), the ground terminal 210 may be split into a charging path ground terminal and a discharging path ground terminal.

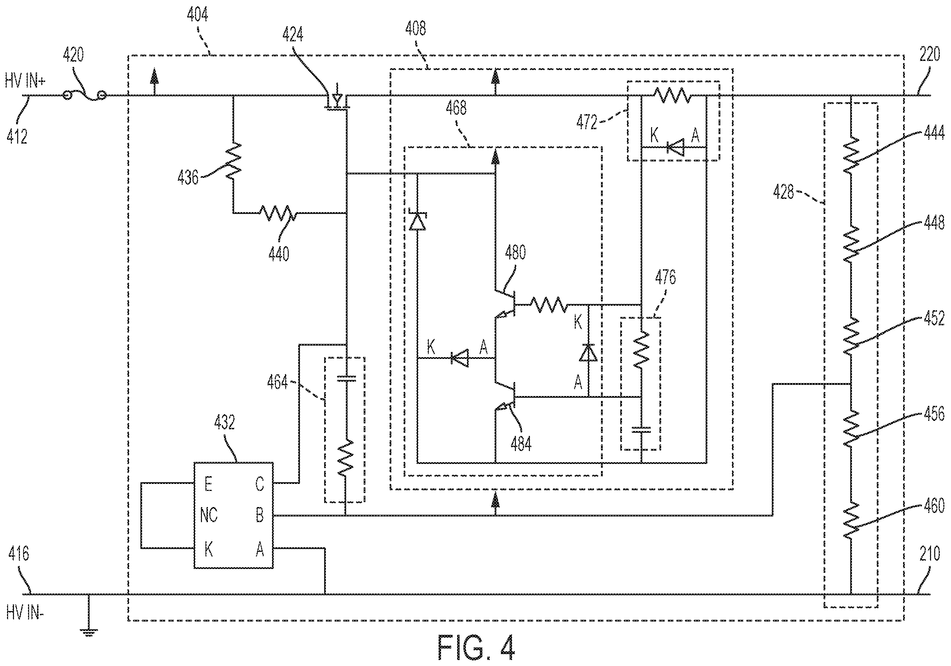

The low-power circuit 320 is connected between the battery cells 305 and the low-power terminal 220. The low-power circuit 320 provides a low-power voltage supply at the low-power terminal 220 to a connected electrical device. In some embodiments, the battery controller 310 may provide control signals to the low-power circuit 320 to control the operation of the low-power circuit 320. The low-power circuit 320 will be described in more detail below with reference to FIGS. 4-5.

Other components 325 of the battery pack 100 may include, for example, voltage monitoring circuits to monitor the discharge voltage, current monitoring circuits to monitor discharge current, temperature sensors, pressure sensors, analog front-ends for cell balancing, etc. The battery controller 310 communicates with the other components 325 to monitor (e.g., receive sensor data) or to control the operation of the other components 325.

In the illustrated example, the battery transceiver 330 is implemented as a differential communication transceiver (e.g., Texas Instruments SN65HVD7 Full Duplex RS-485 Transceiver). The battery transceiver 330 receives a transmission signal 345 from the battery controller 310 and sends a receiver signal 350 to the battery controller 310.

The battery transceiver 330 is also connected to the communication terminals (225, 230, 235, and 240). When the battery pack 100 transmits a communication signal to a connected electrical device or charger, the battery controller 310 sends the transmission signal 345 in addition to a transmission enable signal 355 to the battery transceiver 330. When the battery transceiver 330 receives the transmission enable signal 355, the battery transceiver 330 converts the transmission signal 345 to complementary transmission signals at the positive transmission terminal 225 and the negative transmission terminal 230. When the battery transceiver 330 receives a receiver enable signal 360 from the battery controller 310, the battery transceiver 330 receives complementary signals from the positive receiver terminal 235 and the negative receiver terminal 240, converts the complementary signals to a single receiver signal 350, and sends the receiver signal 350 to the battery controller 310.

In other embodiments, rather than the battery transceiver 330, the battery pack 100 may include separate transmitting and receiving components, for example, a transmitter and a receiver.

A purpose of the low-power terminal 220 is to provide an independent, current limited, low-power path from which the device electronics may power up. Accordingly, the device electronics may power up in a controlled fashion. In addition, the illustrated low-power circuit 320 consists of a low-power mode and a high-power mode. The low-power mode provides a minimum amount of quiescent current when both the electrical device and the battery pack 100 are in a sleep state. During normal discharge operations, the high power mode is enabled such that all device electronics may be operational.

FIG. 4 is a simplified circuit diagram of one embodiment of a low-current supply circuit 400 of the low-power circuit 320. In some embodiments, the low-current supply circuit 400may be implemented using a shunt regulator architecture. The low-current supply circuit 400 includes a voltage loop 404 and a current loop 408 within the voltage loop 404. The low-current supply circuit 400receives input power from the battery cells 305 over a positive terminal 412 and a negative terminal 416. The nominal voltage range of the input power received over the terminals 412 and 416 may be between, for example, 40 Volts (V) to 80 V.

A fuse 420 is connected to the positive terminal 412 to act as a circuit breaker when an excess current flows through the low-current supply circuit 400. The fuse 420 may be rated for a current higher than a current output of the low-current supply circuit 400to allow the low-current supply circuit 400to momentarily allow higher current without nuisance tripping. In one example, the fuse 420 may be rated for 200 mA at 125 V to allow an output current of 100 mA without nuisance tripping of the fuse 420.

The voltage loop 404 includes a field-effect-transistor (FET) 424, a voltage divider circuit 428, and a voltage regulator 432. The FET 424 is connected between the battery cells 305 and the low-power terminal 220. In the illustrated embodiment, a drain of the FET 424 is connected to the output of the fuse 420, and the source of the FET 424 is connected to the low-power terminal 220. Pull up resistors 436 and 440 are connected between the drain and the gate of the FET 424 to keep the FET 424 biased in a manner to allow the FET 424 to conduct current between the battery cells 305 and the low-power terminal 220. The gate of the FET 424 is modulated by the voltage regulator 432.

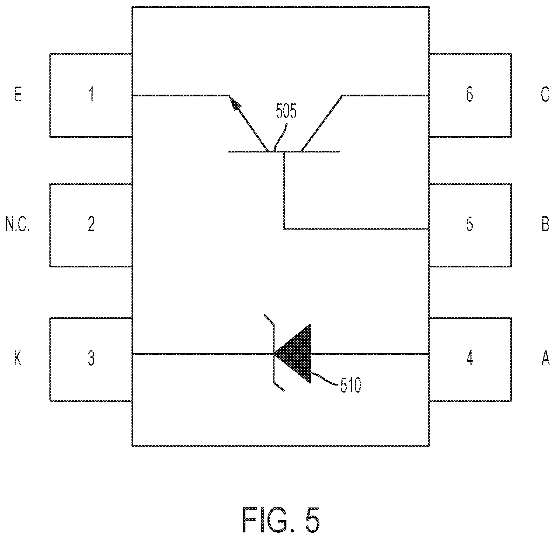

The voltage divider circuit 428 is connected between the low-power terminal 220 and the ground terminal 210. The voltage divider circuit 428 includes resistors 444, 448, 452, 456, and 460. The resistance values of the resistors 444-460 may be selected based on the desired references voltage that may be provided to the voltage regulator 432. In one example, the voltage regulator 432 may be a micro-power voltage regulator including a bipolar junction transistor and a Zener diode reference optimized for µA level bias currents. FIG. 5 is a simplified block diagram of the voltage regulator 432 illustrating the pin connections of the bipolar junction transistor 505 and the Zener diode 510.

Returning to FIG. 4, the emitter of the bipolar junction transistor 505 is connected to the cathode of the Zener diode 510. As a result, the base-emitter junction of the bipolar junction transistor 505 is in series with the Zener diode 510. The anode of the Zener diode 510 is connected to ground. The collector of the bipolar junction transistor 505 is connected to the gate of the FET 424. The base of the bipolar junction transistor 505 receives the reference voltage from the voltage divider circuit 428.

The voltage loop 404 operates to keep the voltage constant at the low-power terminal 220. The collector current of the bipolar junction transistor 505 varies proportionally to the voltage presented at the base terminal of the bipolar junction transistor 505. When the load at the low-power terminal 220 is increased, the voltage across the voltage divider circuit 428 decreases. As a result, the reference voltage provided to the voltage regulator 432 decreases, which, in turn, reduces the collector current. The collector current is also the current through the pull up resistors 436, 440. As such, the gate-source voltage of the FET 424 increases, which then conducts more current and increases the voltage provided at the low-power terminal 220, which is also the voltage across the voltage divider circuit 428. A stabilizer circuit 464 may be used to form a compensation network to stabilize the voltage loop 404.

The current loop 408 maintains operation of the low-current supply circuit 400 in the event of excess current or a short circuit condition. The current loop 408 may be designed to have a foldback feature which allows a first load current (e.g., 100 mA) for a pre-defined timed period before reducing the current output to a constant second load current (e.g., 50 mA). The current loop 408 includes a current regulator circuit 468, a current sensor 472 (e.g., a current sense resistor), and a timer circuit 476.

The current regulator circuit 468 includes a first bipolar junction transistor 480 and a second bipolar junction transistor 484. The first bipolar junction transistor 480 modulates the gate voltage of the FET 424 until the current sensor 472 indicates that the low-power circuit 320 is outputting a first load current. The timer circuit 476 including a resistor and a capacitor is connected between the base and emitter of the second bipolar junction transistor 484. The resistance and capacitance values of the timer circuit 476 may be selected based on the desired timing before which the load current drops from the first load current to the second load current.

Approximately at the same time the first bipolar junction transistor 480 is modulating the FET 424, the capacitor of the timer circuit 476 is being charged. For example, the capacitor and resistor values of the timer circuit 476 may be selected such that the capacitor of the timer circuit 476 charges in 1s. When the capacitor of the timer circuit 476 is charged, the second bipolar junction transistor 484 starts conducting current thereby producing a voltage drop across the second bipolar junction transistor 484. The first bipolar junction transistor 480 then modulates the FET 424 until the current output reaches the second load current (e.g., 50mA).

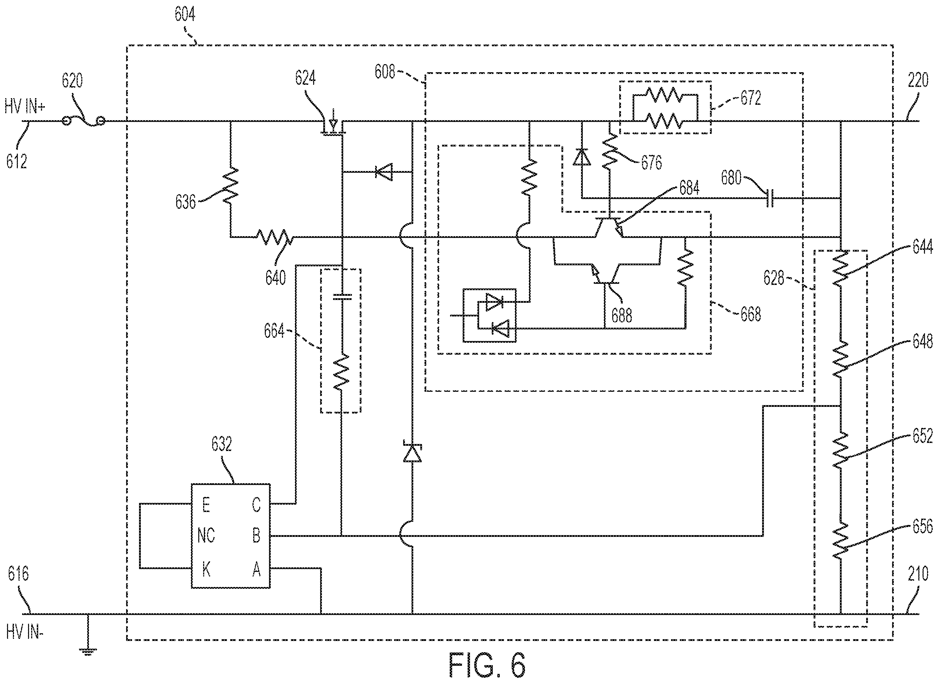

FIG. 6 is a simplified circuit diagram of another embodiment of a low-current supply circuit 600 of the low-power circuit 320. The low-current supply circuit 600 may function in a manner similar to the low-current supply circuit 400. The low-current supply circuit 600 includes a voltage loop 604 and a current loop 608 within the voltage loop 604. The low-current supply circuit 600 receives input power from the battery cells 305 over a positive terminal 612 and a negative terminal 616. The nominal voltage range of the input power received over the terminals 612 and 616 may be between, for example, 40 Volts (V) to 80 V.

A fuse 620 is connected to the positive terminal 612 to act as a circuit breaker when an excess current flows through the low-current supply circuit 600. The fuse 620 may be rated for a current higher than a current output of the low-current supply circuit 600 to allow the low-current supply circuit 600 to momentarily allow higher current without nuisance tripping. In one example, the fuse 620 may be rated for 200 mA at 125 V to allow an output current of 100 mA without nuisance tripping of the fuse 620.

The voltage loop 604 includes a field-effect-transistor (FET) 624, a voltage divider circuit 628, and a voltage regulator 632. The FET 624 is connected between the battery cells 305 and the low-power terminal 220. In the illustrated embodiment, a drain of the FET 624 is connected to the output of the fuse 620, and the source of the FET 624 is connected to the low-power terminal 220. Pull up resistors 636 and 640 are connected between the drain and the gate of the FET 624 to keep the FET 624 biased in a manner to allow the FET 624 to conduct current between the battery cells 305 and the low-power terminal 220. The gate of the FET 624 is modulated by the voltage regulator 632.

The voltage divider circuit 628 is connected between the low-power terminal 220 and the ground terminal 210. The voltage divider circuit 628 includes resistors 644, 648, 652, and 656. The resistance values of the resistors 644-656 may be selected based on the desired reference voltages that may be provided to the voltage regulator 632. As described above, the voltage regulator 632 may be a micro-power voltage regulator including a bipolar junction transistor and a Zener diode reference optimized for µA level bias currents (for example, as shown in FIG. 5).

The emitter of the bipolar junction transistor 505 is connected to the cathode of the Zener diode 510. As a result, the base-emitter junction of the bipolar junction transistor 505 is in series with the Zener diode 510. The anode of the Zener diode 510 is connected to ground. The collector of the bipolar junction transistor 505 is connected to the gate of the FET 624. The base of the bipolar junction transistor 505 receives the reference voltage from the voltage divider circuit 628.

The voltage loop 604 operates to keep the voltage constant at the low-power terminal 220. The collector current of the bipolar junction transistor 505 varies proportionally to the voltage presented at the base terminal of the bipolar junction transistor 505. When the load at the low-power terminal 220 is increased, the voltage across the voltage divider circuit 628 decreases. As a result, the reference voltage provided to the voltage regulator 632 decreases, which, in turn, reduces the collector current. The collector current is also the current through the pull up resistors 636, 640. As such, the gate-source voltage of the FET 624 increases, which then conducts more current and increases the voltage provided at the low-power terminal 220, which is also the voltage across the voltage divider circuit 628. A stabilizer circuit 664 may be used to form a compensation network to stabilize the voltage loop 604.

The current loop 608 protects the low-current supply circuit 600 in the event of excess current or a short circuit condition. The current loop 608 may be designed to have a fold-back feature which allows a first load current (e.g., 180 mA) for a pre-defined time period (e.g., time) before reducing the current output to a constant second load current (e.g., 60 mA). The current loop 608 includes a current regulator circuit 668, a current sensor 672 (e.g., current sense resistors), and a timer circuit including a resistor 676 and a capacitor 680.

The current regulator circuit 668 includes a first bipolar junction transistor 688 and a second bipolar junction transistor 684. The first bipolar junction transistor 688 modulates the gate voltage of the FET 624 until the current sensor 672 indicates that the low-current supply circuit 600 is outputting a first load current. The timer circuit, including a resistor 676 and a capacitor 680, is connected between the base and emitter of the second bipolar junction transistor 684. The resistance and capacitance values of the timer circuit may be selected based on the desired timing before which the load current drops from the first load current to the second load current.

Approximately at the same time the first bipolar junction transistor 688 is modulating the FET 624, the capacitor 680 of the timer circuit 676 is being charged. For example, the capacitor 680 and resistor 676 values of the timer circuit may be selected such that the capacitor 680 of the timer circuit charges in 700ms. When the capacitor 680 of the timer circuit is charged, the second bipolar junction transistor 684 starts conducting current thereby producing a voltage drop across the first bipolar junction transistor 687. The second bipolar junction transistor 684 then modulates the FET 624 until the current output reaches the second load current (e.g., 60mA).

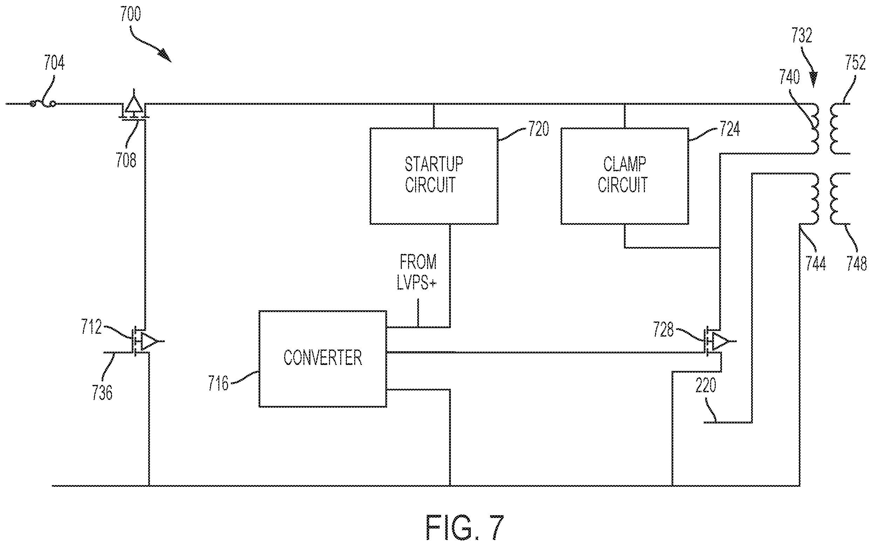

FIG. 7 is a simplified circuit diagram of one embodiment of a high-current supply circuit 700 of the low-power circuit 320. In the example illustrated, the high-current supply circuit 700 includes a fuse 704 an input switch 708, an enable switch 712, a flyback converter 716, a startup circuit 720, a clamp circuit 724, a primary switch 728, and a transformer circuit 732. The fuse 704 protects the high-current supply circuit 700 from short-circuit faults. The fuse 704 may have a nominal rating of, for example, 500mA. The fuse 704 may be dimensioned to allow for full power operation at low line input.

When an enable input 736, for example, a wake-up signal, is applied to the enable switch 712, the enable switch 712 closes the input switch 708, thereby allowing current from the battery cells 305 to flow to the high-current supply circuit 700. The startup circuit 720 provides an initial power supply to operate the converter 716.

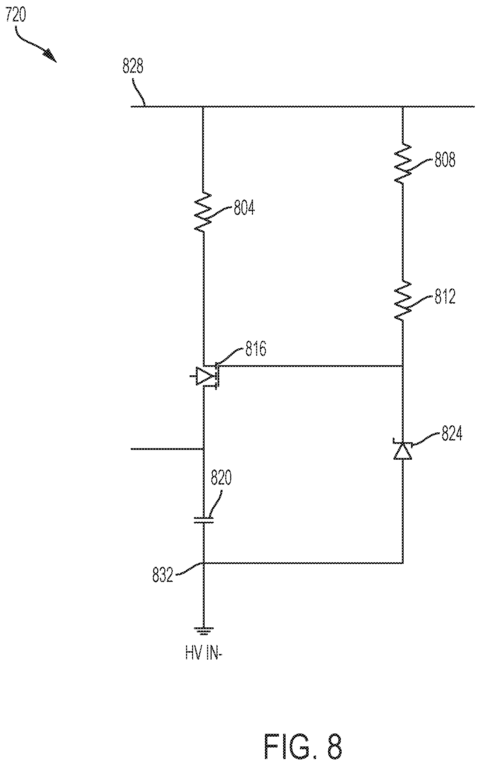

FIG. 8 illustrates one example embodiment of the startup circuit 720. In the example illustrated, the startup circuit 720 includes a first resistor 804, a second resistor 808, a third resistor 812, a switch 816, a capacitor 820, and a diode 824. The first resistor 804, the switch 816 and the capacitor 820 are connected in series between the positive power supply 828 and ground 832. The second resistor 808, the third resistor 812 and the diode 824 are connected in series between the positive power supply 828 and ground 832 and in parallel to the first resistor 804, the switch 816, and the capacitor 820.

Initially, the voltage across the capacitor 820 may be zero. The second resistor 808, the third resistor 812, and the diode form, for example, 15V reference on a gate of the switch 816. As power is applied to the startup circuit, the switch 816 is turned on. The capacitor 820 is then charged up and by the drain current of the switch 816. When the voltage across the capacitor 820 is, for example, approximately 8V, the startup circuit 720 powers the converter 716.

Returning to FIG. 7, when the converter 716 receives the startup power, the converter 716 starts switching and modulating a gate of the primary switch 728. Eventually, the converter 716 starts up and regulates to, for example, approximately 15V. At this point, the startup circuit 720 may be turned off and the converter 716 may be powered by the output of the high-current supply circuit 700.

The clamp circuit 724 manages energy in the leakage inductance of the transformer circuit 732. The transformer circuit 732 includes a primary winding 740, and three secondary windings 744, 748, and 752. When the primary switch 728 is closed, the voltage drawn across the primary winding 740 is stepped down and provided to the secondary windings 744, 748, and 752. The secondary winding 744 provides the low-power voltage supply at the low-power voltage supply terminal 220. The secondary windings 748 and 752 provide power to the discharging switch 335 and the charging switch 340 of the battery pack 100. In some embodiments, a low dropout regulator (LDO) may be used instead of the transformer circuit 732 to step down the voltage.

When there is an activity that enables the high-current supply circuit 700 of the low-power circuit 320, the high-current supply circuit 700 may remain enabled, for example, for 100ms from last known activity before disabling the high-current supply circuit 700 and enabling the low-current supply circuit 600. This may, for example, allow the battery pack 100 sufficient time for an orderly shutdown, to attempt a communications restart in the event of a fault.

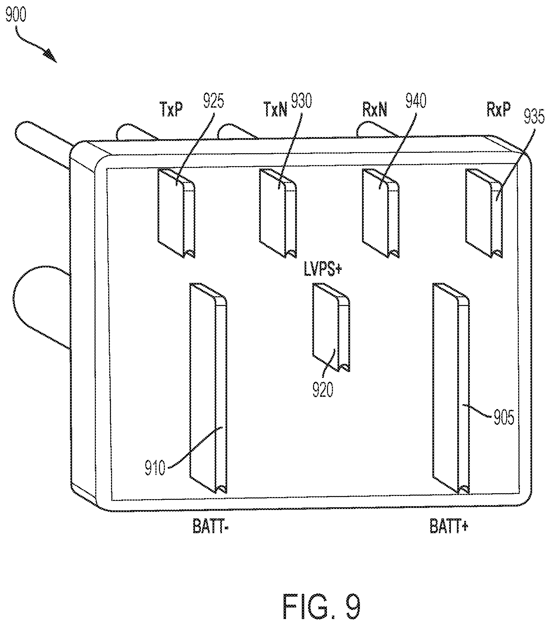

With reference to FIG. 9, a device terminal block 900 includes a positive power terminal 905, a ground terminal 910, a low-power terminal 920, a positive transmission terminal 925, a negative transmission terminal 930, a positive receiver terminal 935, and a negative receiver terminal 940. As described above, the positive power terminal 905 and the ground terminal 910 are connected to power terminals (i.e., positive battery terminal 205 and ground terminal 210) of the battery pack 100 to receive a main discharging current for the operation of the electrical device. The low-power terminal 920 receives a low-power voltage supply from the low-power terminal 220 of the battery pack 100 to power certain functions of the electrical device.

The positive transmission terminal 925, the negative transmission terminal 930, the positive receiver terminal 935, the negative receiver terminal 940 may together be referred to as "communication terminals" of the electrical device. The communication terminals allow for differential communication between the battery pack 100 and the electrical device. As with the communication terminals of the battery pack 100, the illustrated device communication terminals are only used to either receive or transmit data but not both. In other embodiments, the device communication terminals follow a full-duplex standard (for example, RS485 standard).

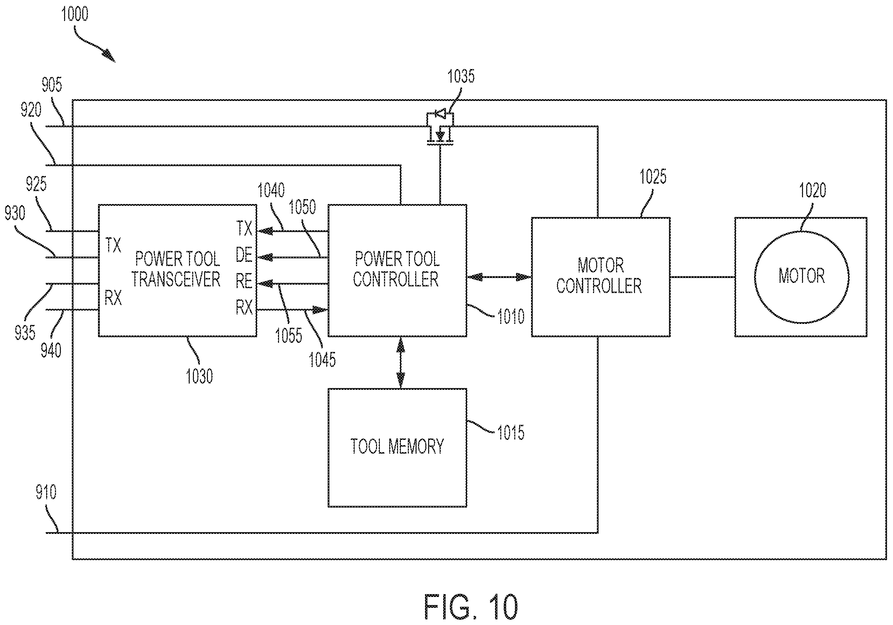

FIG. 10 is a simplified block diagram of an electrical device 1000. The electrical device 1000 includes a device controller 1010, a device memory 1015, a load (e.g., a motor 1020), a load (motor) controller 1025, and a device transceiver 1030. The motor 1020 may be a brushed or brushless motor and is controlled by the motor controller 1025.

The motor controller 1025 may be a switch bridge including FETs that control the operation of the motor 1020. The motor controller 1025 may also include position sensors and other motor sensors. The motor controller 1025 may send positional information of the motor 1020 to the device controller 1010 and may receive control signals from the device controller 1010.

The device controller 1010 may be implemented in various ways including ways similar to those described above with respect to the battery controller 310. Likewise, the device memory 1015 may be implemented in various ways including ways that are similar to those described with respect to the battery memory 315. The device memory 1015 may store instructions received and executed by the device controller 1010 to carry out the functionality. The device controller 1010 receives operating power from the low-power terminal 920. In some embodiments, the device controller 1010 and the battery pack controller 310 may be implemented on a single controller.

In some embodiments, a discharging switch 1035 is connected between the positive power terminal 1005 and the motor controller 1025. The device controller 1010 operates to control (e.g., opens and closes) the discharging switch 1035 to control the discharge from the battery pack 100. The discharging switch 1035 may be implemented using bi-polar junction transistors, field-effect-transistors (FETs), etc. In some embodiments, the discharging switch 1035 may be connected on the ground-side of the motor controller 1025 between the motor controller 1025 and the ground terminal 910.

In the illustrated example, the device transceiver 1030 is implemented as a differential communication transceiver (e.g., Texas Instruments SN65HVD7 Full Duplex RS-485 Transceiver). The device transceiver 1030 receives a transmission signal 1040 from the device controller 1010 and sends a receiver signal 1045 to the device controller 1010. The device transceiver 1030 is also connected to the communication terminals.

When the electrical device 1000 transmits a communication signal to a connected battery pack 100, the device controller 1010 sends the transmission signal 1040 in addition to a transmission enable signal 1050 to the device transceiver 1030. When the device transceiver 1030 receives the transmission enable signal 1050, the device transceiver 1030 converts the transmission signal 1040 to complementary transmission signals at the positive transmission terminal 925 and the negative transmission terminal 930.

When the device transceiver 1030 receives a receiver enable signal 1055 from the device controller 1010, the device transceiver 1030 receives complementary signals from the positive receiver terminal 935 and the negative receiver terminal 940, converts the complementary signals to a single receiver signal 1045, and sends the receiver signal 1045 to the device controller 1010.

In other embodiments, rather than the device transceiver 1030, the device 1000 may include separate transmitting and receiving components, for example, a transmitter and a receiver.

During a sleep state, the battery pack 100 may disable the receiver terminals 235 and 240 by sending a receiver disable signal 360. In some embodiments, the device transceiver 1030 may send a wake-up pulse to the battery pack 100 to request operational power for the electrical device 1000. The battery pack 100 may include a wake-up circuit to detect the wakeup pulse, which, in turn, will drive an interrupt to the battery controller 310. The battery controller 310 enables the receiver functions of the battery transceiver 330 upon receiving the interrupt.

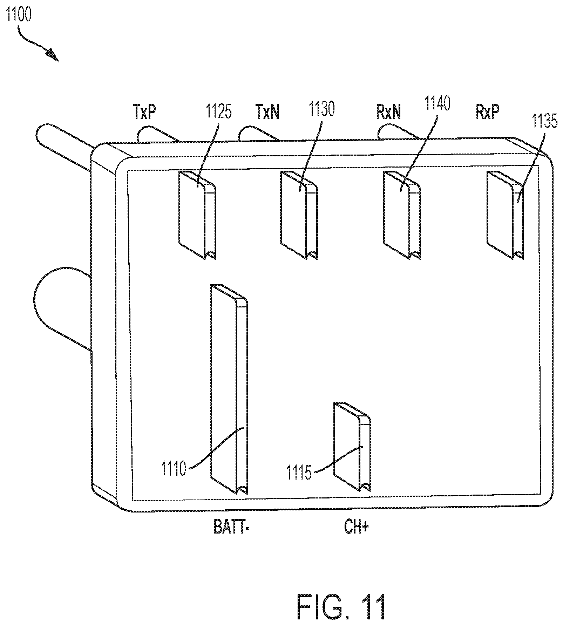

With reference to FIG. 11, a charger terminal block 1100 includes a ground terminal 1110, a charger terminal 1115, a positive transmission terminal 1125, a negative transmission terminal 1130, a positive receiver terminal 1135, and a negative receiver terminal 1140. The charger terminal 1115 and the ground terminal 1110 are connected to terminals (e.g., the charger terminal 215 and ground terminal 210) of the battery pack 100 to charge the battery cells 305 of the battery pack 100. A low-power terminal may not be needed, because the charger independently receives operating power from an external power source.

The positive transmission terminal 1125, the negative transmission terminal 1130, the positive receiver terminal 1135, the negative receiver terminal 1140 may together be referred to as "communication terminals" of the charger. The communication terminals allow for differential communication between the battery pack 100 and the charger. As with the communication terminals of the battery pack 100 and the electrical device 1000, the illustrated charger communication terminals are only used to either receive or transmit data but not both. In other embodiments, the charger communication terminals follow a full-duplex standard (for example, RS485 standard).

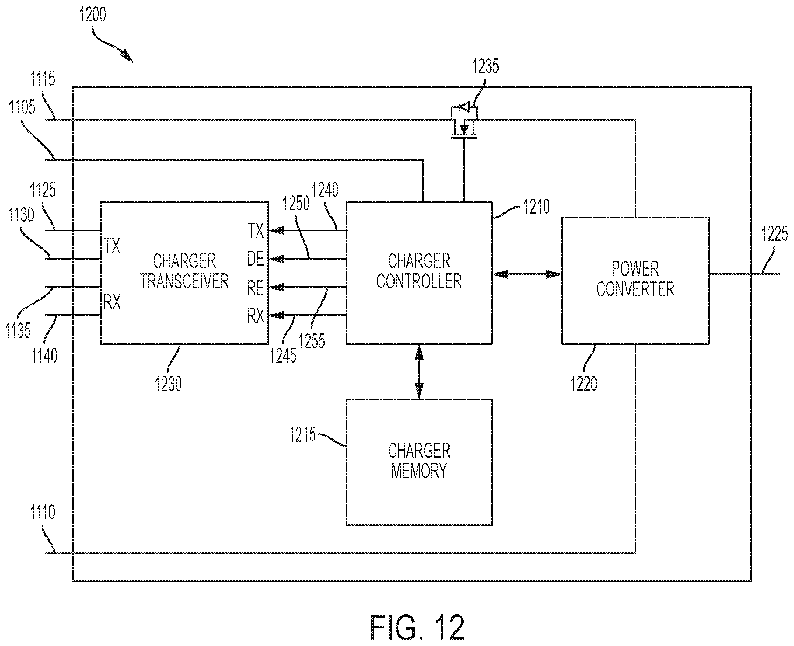

FIG. 12 is a simplified block diagram of a charger 1200. The charger 1200 includes a charger controller 1210, a charger memory 1215, a power converter 1220, a power source connector 1225, and a charger transceiver 1230. The power source connector 1225 connects to an external power source (e.g., wall outlet) to receive power for charging a battery pack 100. The power converter 1220 converts the AC power received from the external power source to a DC power to charge the battery pack 100. The power converter 1220 may receive control signals from the charger controller 1210 to control the charging operation.

The charger controller 1210 may be implemented in various ways including ways similar to those described above with respect to the battery controller 310. Likewise, the charger memory 1215 may be implemented in various ways including ways similar to those described above with respect to the battery memory 315. The charger memory 1215 may store instructions received and executed by the charger controller 1210 to carry out the functionality. The charger controller 1210 receives operating power from the power converter 1220.

In some embodiments, a charging switch 1235 is connected between the charger terminal 1115 and the power converter 1220. The charger controller 1210 controls (e.g., opens and closes) the charging switch 1235 to control charging of the battery pack 100. The charging switch 1235 may be implemented using bi-polar junction transistors, field-effect-transistors (FETs), etc. In some embodiments, the charging switch 1235 may be connected on the ground-side of the power converter 1220 between the power converter 1220 and the ground terminal 1110. The charger controller 1210 may monitor the positive power terminal 1205 to determine a state of charge of the battery pack 100. In some embodiments, back-to-back MOSFETs may be used for the charging switch 1235. MOSFETs include a body diode which allows a small amount of current to flow through even when the MOSFET is open (i.e., turned off). Connecting a second MOSFET back-to-back with a first MOSFET such that the body diodes are pointing in the opposite direction may ensure that no current flows through the charging terminal 1115 when the MOSFETs are open (i.e., turned off).

In the illustrated example, the charger transceiver 1230 is implemented as a differential communication transceiver (e.g., Texas Instruments SN65HVD7 Full Duplex RS-485 Transceiver). The charger transceiver 1230 receives a transmission signal 1240 from the charger controller 1210 and sends a receiver signal 1245 to the charger controller 1210. The charger transceiver 1230 is also connected to the communication terminals.

When the charger 1200 transmits a communication signal to a connected battery pack 100, the charger controller 1210 sends the transmission signal 1240 in addition to a transmission enable signal 1250 to the charger transceiver 1230. When the charger transceiver 1230 receives the transmission enable signal 1250, the charger transceiver 1230 converts the transmission signal 1240 to complementary transmission signals at the positive transmission terminal 1125 and the negative transmission terminal 1130.

When the charger transceiver 1230 receives a receiver enable signal 1155 from the charger controller 1210, the charger transceiver 1230 receives complementary signals from the positive receiver terminal 1135 and the negative receiver terminal 1140, converts the complementary signals to a single receiver signal 1145, and sends the receiver signal 1145 to the charger controller 1210.

In other embodiments, rather than the charger transceiver 1230, the charger 1200 may include separate transmitting and receiving components, for example, a transmitter and a receiver.

Whenever the battery pack 100 connects to an electrical device 1000 or a charger 1200 for the first time, a full authentication process may be done before the electrical device 1000 or the charger 1200 may be granted permission for deployment. A quick re-authentication feature enables a fast means for devices to re-engage after a sleep event without requiring a full authentication.

This quick re-authentication process starts after a successful full authentication, in which the device controller 1010 (or a charger controller 1210) generates a random number (or a series of random numbers) and shares those numbers with the battery pack 100. These numbers are used as quick "keys" to re-authenticate after waking from sleep. If, after waking, the device controller 1010 loads one of those values into the quick authentication location, then the battery pack 100 considers itself authenticated to the electrical device 1000. If an invalid value is loaded, then a full authentication is required.

To accomplish this, the battery pack 100 has a "QUICK AUTHENTICATION" memory location, as well as a "SET QUICK AUTHENTICATION" location. The SET QUICK AUTHENTICATION may be write-only and may only able to be written after the battery pack 100 considers itself authenticated to the electrical device 1000 (or the charger 1200). The battery pack 100 may no longer consider itself fully authenticated once the battery transceiver 330 is put to sleep; however, the quick authentication is available unless the battery pack 100 has explicitly been instructed to drop the authentication session. This may happen, for example, when the electrical device 1000 detects that the battery pack 100 is about to be ejected and thus requests the battery pack 100 to drop the session.

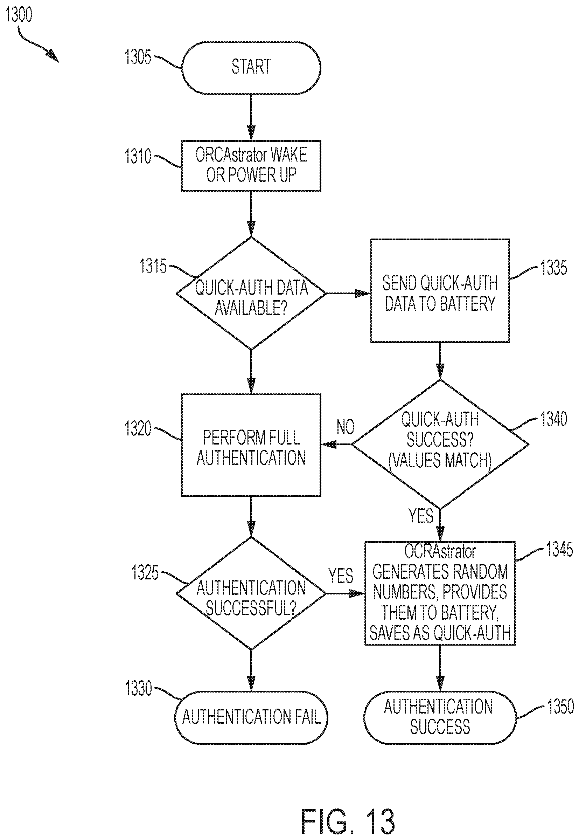

QUICK AUTHENTICATION may be write-only and may only able to be written once prior to requiring a full authentication. This may be one of the only memory locations that is writeable when the battery pack 100 is not in an authenticated state. After QUICK AUTHENTICATION is written (once only), the value in QUICK AUTHENTICATION is compared to the value in SET QUICK AUTHENTICATION. If they match, the battery pack 100 considers itself authenticated. If they do not match, then the battery pack 100 requires a full authentication prior to any other communications. This process is illustrated in FIG. 13.

In order to facilitate the power down process of the system, a latch engagement system may be incorporated into a latch interface. This engagement system may consist of a switch which will inform the device controller 1010 that the battery pack 100 is about to be removed from the electrical device 1000. Thus, the electrical device 1000 may enact a shutdown procedure of its power path and inform the battery pack 100 of the same.

When the communication session between the battery pack 100 and the electrical device 1000 is terminated, the battery pack 100 drops the authenticated session, disables the battery transceiver 330, and enables a wakeup circuit. The battery pack 100 may need a wake-up signal through the battery transceiver 330 and then re-authentication to once again begin a valid communications session.

When the latch of the electrical device 1000 is engaged with the battery pack 100, the electrical device 1000 enters a discovery mode. In the discovery mode, the electrical device 1000 sends a wake up pulse and begins an authentication process. When the latch is not engaged, the electrical device 1000 enters a sleep mode, in which the electrical device 1000 may be woken up when the latch is engaged.

At a physical interface level (i.e., physical interface between a battery pack 100 and the charger 1200 or the electrical device 1000), a communications session timeout may be enforced. Because full duplex communications are permitted, there are separate timeout rules for both the transmitter and the receiver. In short, communications must occur at a rate of at least every 10 msec. If communications do not happen within 10 msec, then the physical interface may timeout the session. In order to allow multiple retries within 10 msec, the communications period may be set at 4 msec intervals. Thus, if a fault happens, at least one retry is permitted before the physical interface will timeout and fault the communications session.

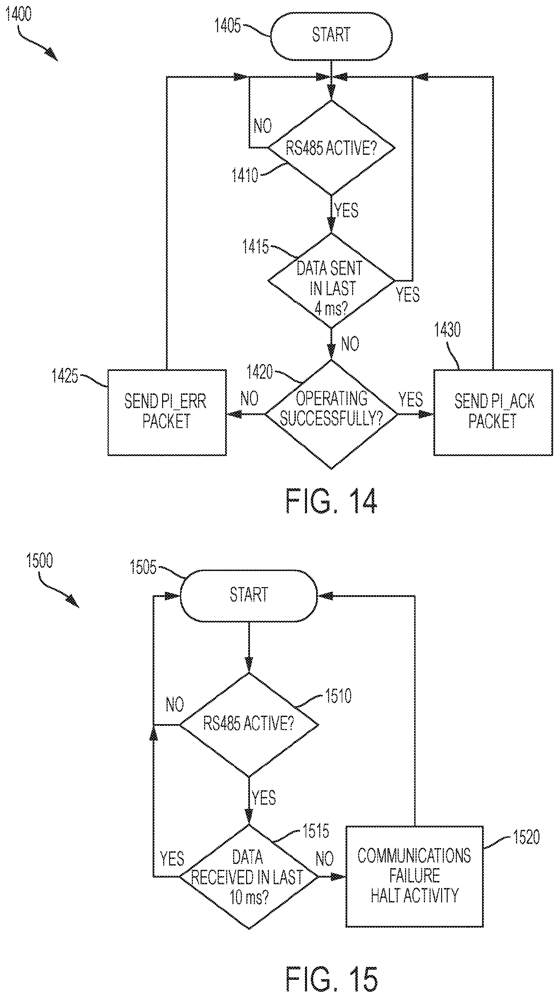

A timing of both the transmitter and the receiver is illustrated in FIGS. 14-15. The table below is a further explanation of the timeout conditions.

| **Role** | **Period** | **Action** | **Rationale** | |
|---|---|---|---|---|
| Transmitter | 4 msec | Packet byte | Normal comms occurring every period | |
| | | PI_ACK | If receiving a packet that is longer than the period, then transmit the PI_ACK to indicate the session is still valid | |
| | | PI_ERROR | If an error condition occurs at the PI level, relay this generic information to the other device | |
| Receiver | 10 msec | Drop communications session | If the receiver has not received | |
| | | | | • A valid byte |
| | | | | • A PI_ACK (as first byte) |
| | | | | • A PI_ERROR (as first byte) |
| | | | Assume the communications session is faulted | |

Referring to FIGS. 9 and 11, a thickness of one or more male terminals of an electrical device or a battery charger can be selected to optimize weight, strength, and durability characteristics of the terminal(s). In some embodiments, the terminals have a thickness of between 0.8 millimeter (mm) and 1.2 mm. In one example, the terminals have a thickness of about 1 mm.

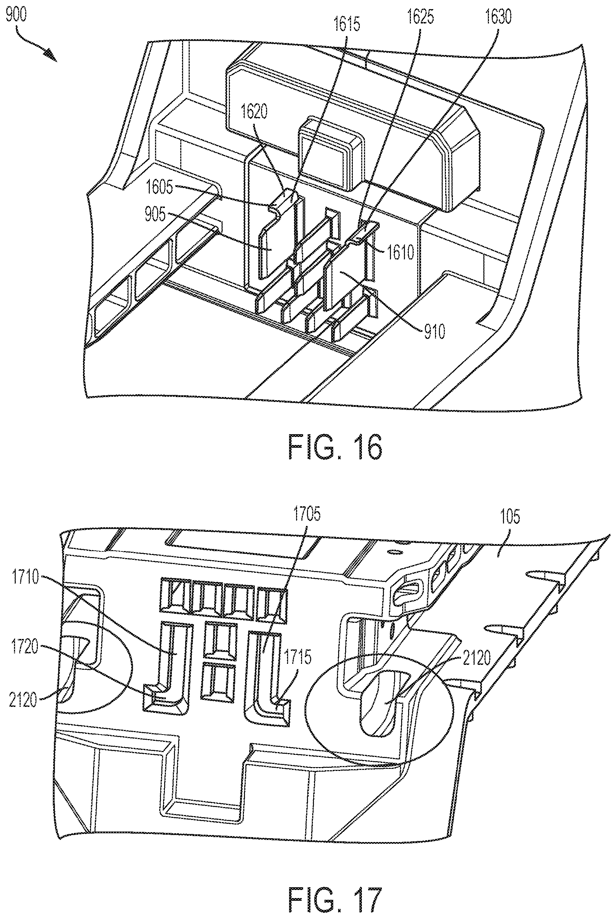

In some constructions, male terminals 1110-1140 are (see FIGS. 9 and 11) generally flat plates, including opposite axially-extending faces connected by opposite axially-extending edges. Each terminal 1110-1140 extends from the housing to a free end. In some constructions (see FIG. 16), terminals (including power terminals 905, 910) extend above the structure of the guide rails 1260.

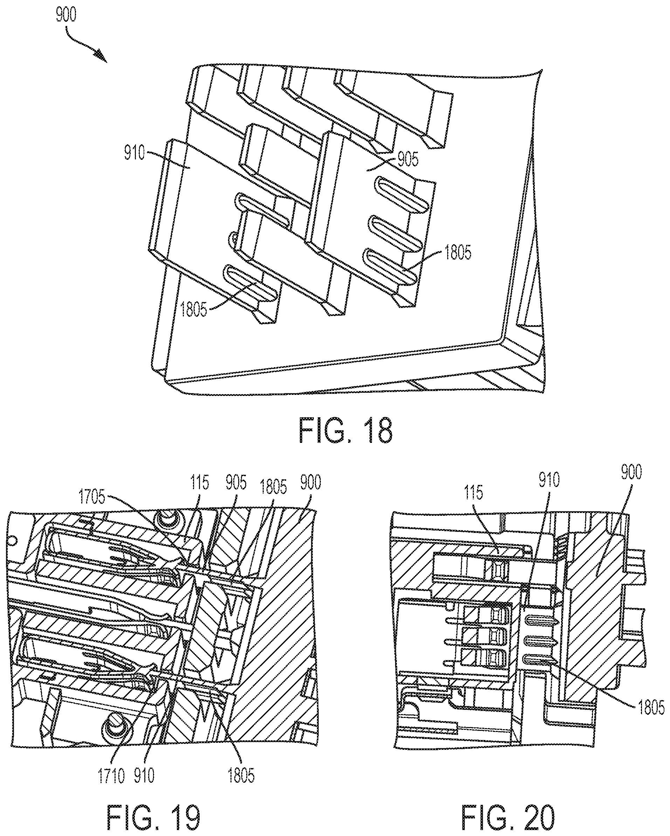

In some embodiments (see, e.g., FIGS. 16 and 18), the terminals 905, 910 may be constructed to increase the strength, durability, etc., to, for example, protect against damage during drops or during handling of the electrical devices. In one construction (see FIG. 16), a terminal (e.g., the positive power terminal 905, the ground terminal 910, etc.) includes a wing (e.g., a positive terminal wing 1605, a ground terminal wing 1610, etc.).

The illustrated positive terminal wing 1605 is integrally formed with the positive power terminal 905 and includes a connecting portion 1615 and a ledge portion 1620. In the illustrated construction, the ledge portion 1620 extends transverse (e.g., substantially perpendicular) to the positive power terminal 905 towards a first side edge of the device terminal block 900. The connecting portion 1615 transitions (e.g., curves) between and connects the positive power terminal 905 and the ledge portion 1620.

Similarly, the illustrated ground terminal wing 1610 is integrally formed with the ground terminal 910 and includes a connecting portion 1625 and a ledge portion 1630. In the illustrated construction, the ledge portion 1630 extends transverse (e.g., substantially perpendicular) to the ground terminal 910 toward an opposite second side edge of the device terminal block 900. The connecting portion 1625 transitions (e.g., curves) between and connects the ground terminal and the ledge portion 1630.

The terminal wings 1605, 1610 may be provided such that they extend only part of the axial length (e.g., between about 25% and about 50% of the axial length) of the associated terminal 905, 910, respectively. Only the part of the terminal 905, 910 extending beyond the associated terminal wing 1605, 1610 may be received in the female terminal of the battery pack terminal block 115 (see FIGS. 19-20). The terminal wings 1605, 1610 do not interfere with electrical connection between the terminals of the electrical device and the battery pack. In other embodiments, the terminal wings 1605, 1610 may extend the full axial length of the associated terminal 905, 910 respectively.

Referring to FIG. 17, the battery pack housing 105 may be constructed to accommodate the terminal wing(s) 1605, 1610. The housing 105 includes a positive power terminal opening 1705 and a ground terminal opening 1710 to receive the positive power terminal 905 and the ground terminal 910, respectively. In the illustrated construction, the positive power terminal opening 1705 includes a wing-receiving portion 1715 shaped to receive the positive terminal wing 1605. Similarly, the illustrated ground terminal opening 1710 includes a wing-receiving portion 1720 shaped to receive the ground terminal wing 1610. The wing 1605, 1610 may engage a wall of the associated wing-receiving portion 1715, 1720 to, for example, transfer forces, limit relative movement between the battery pack and the electrical device, etc., during drops or during handling of the electrical devices.

A battery pack housing (not shown) which is not constructed to accommodate the winged terminals 905, 910 (e.g., without the wing-receiving portion 1710, 1720) may be prevented from electrically connecting with an electrical device or a charger including such winged terminals 905, 910. The winged terminals 905, 910 may contribute to a lock-out feature to inhibit electrical connection of incompatible battery packs and electrical devices or chargers.

In some embodiments, additional structure (e.g., support ribs, dimples, etc., having different shapes, constructions) may be provided on the power terminal(s) instead of or in addition to the terminal wing(s) 1605, 1610. Referring to FIG. 18, the positive power terminal 905 and the ground terminal 910 are provided with one or more support ribs 1805 on one face. The rib(s) 1805 provide additional support to each terminal 905, 910.

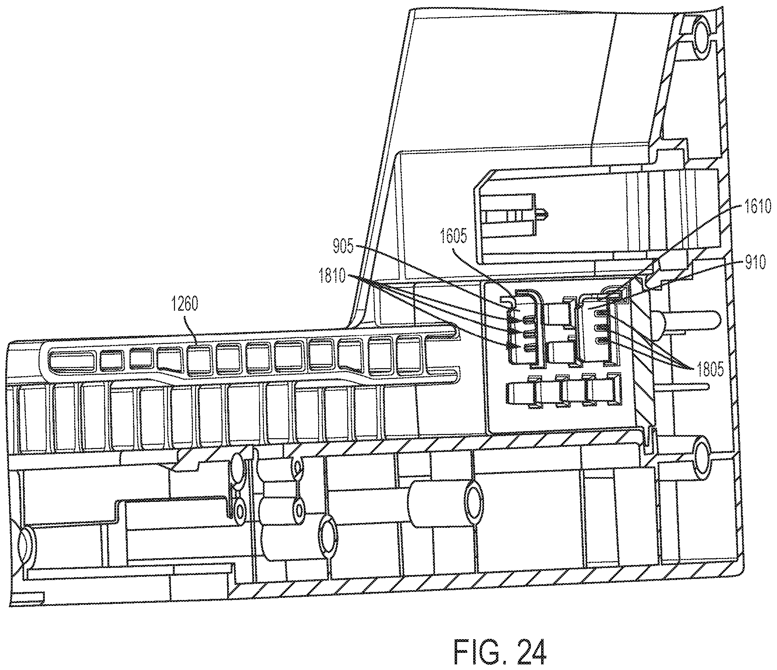

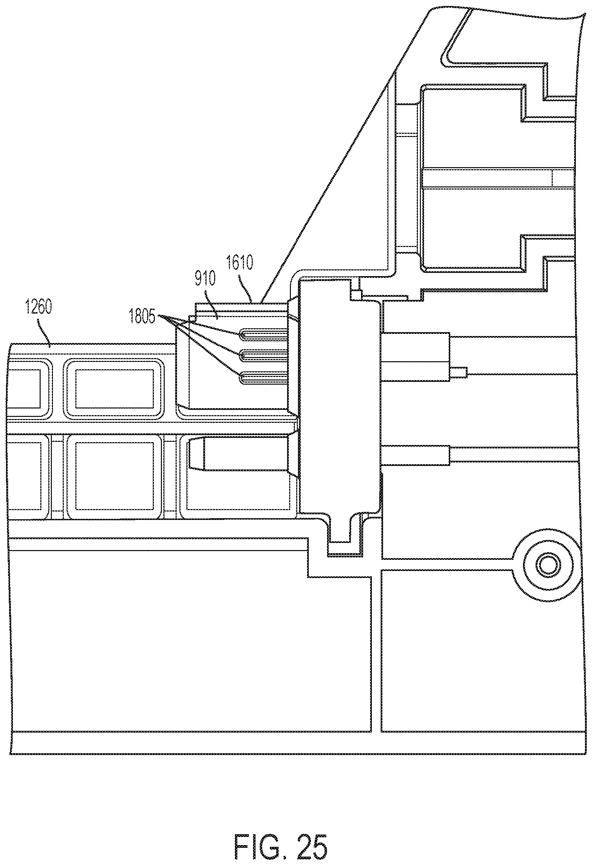

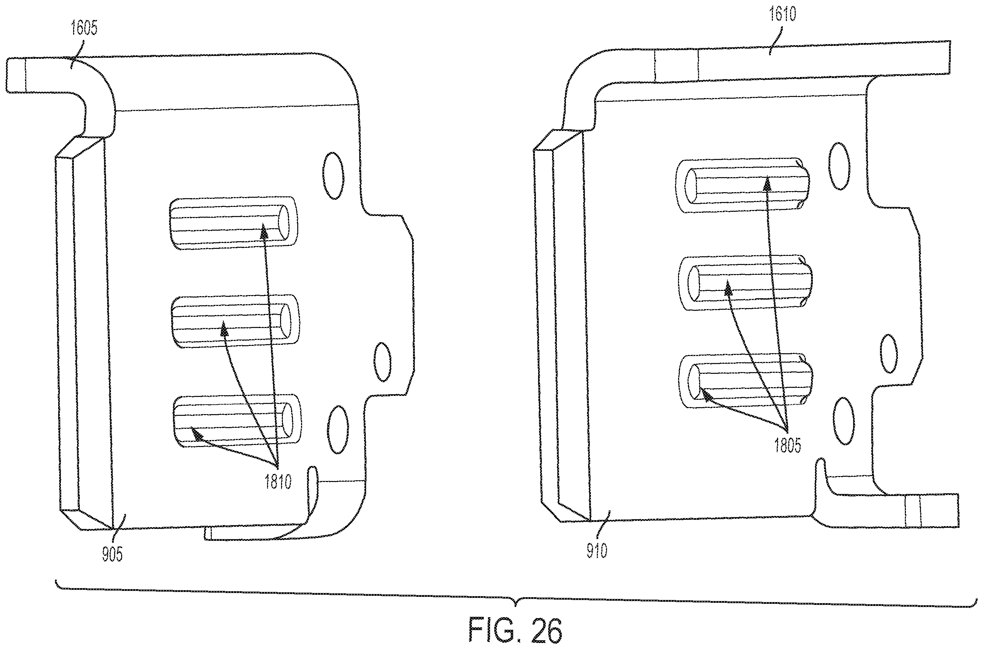

In some embodiments (see FIG. 18), the ribs 1805 are separate from and attached to the terminal(s) 910. In such constructions, the ribs 1805 may be formed of a different material (e.g., plastic) than the terminal(s) 905, 910 (formed of metal). In some embodiments (see FIGS. 24-26), the ribs 1805 are integrally formed with the terminal(s) 905, 910 and of the same material (e.g., metal).

With multiple support ribs 1805, the ribs 1805 are spaced apart (e.g., substantially equidistant) along the face of the terminal 905, 910. The ribs 1805 may be provided such that they extend only part of the axial length (e.g., between about 25% and about 50% the axial length (e.g., about 33%)) of the associated terminal 905, 910. Only the part of the terminal 905, 910 extending beyond the ribs 1805 is received in the female terminals of the battery pack terminal block 115 (see FIGS. 19-20). The ribs 1805 do not inhibit electrical connection between the terminals of the electrical device and the battery pack. In other embodiments, the ribs 1805 may extend the full axial length of the associated terminal 905, 910.

Referring to FIGS. 19-20, the battery pack housing 105 is constructed to accommodate the terminal(s) 905, 910 with the rib(s) 1805. Particularly, the width of the positive power terminal opening 1705 and the ground terminal opening 1710 is increased to accommodate the ribs 1805.

A battery pack housing (not shown) which is not constructed to accommodate the terminal(s) 905, 910 with rib(s) 1805 (e.g., without the increased width terminal opening(s) 1705, 1710) may be prevented from electrically connecting with an electrical device or a charger including such terminals 905, 910. The terminal(s) 905, 910 with rib(s) 1805 may contribute to a lock-out feature to inhibit electrical connection of incompatible battery packs and electrical devices or chargers.

In some constructions (see FIGS. 24-26), one or more terminal(s) (e.g., the terminals 905, 910) include wings 1605, 1610, respectively, and ribs 1805. The terminal wings 1605, 1610 may be provided such that they extend only part of the axial length (e.g., between about 75% and about 95% (e.g., about 91%) of the axial length) of the associated terminal 905, 910, respectively. Likewise, the ribs 1805 may be provided such that they extend only part of the axial length (e.g., between about 25% and about 50% the axial length (e.g., about 33%)) of the associated terminal 905, 910. As shown, the length of the wings 1605, 1610 and the ribs may be different. In other embodiments, the terminal wings 1605, 1610 and the ribs 1805 may extend the full axial length of the associated terminal 905, 910 respectively.

In the illustrated construction, each wing 1605, 1610 is formed with the associated terminal 905, 910. The illustrated ribs 1805 are also formed with the associated terminal 905, 910, for example, by stamping, such that the opposite face of the terminal 905, 910 has corresponding recesses 1810.

It should be understood that, in other constructions (not shown), the battery pack may include male terminals and the electrical device and the charger may include female terminals. In such constructions (not shown), the pack male terminal(s) may include the wing(s) and/or the support rib(s), and the device housing or the charger housing may include the terminal opening to accommodate the wing(s), the rib(s), etc.

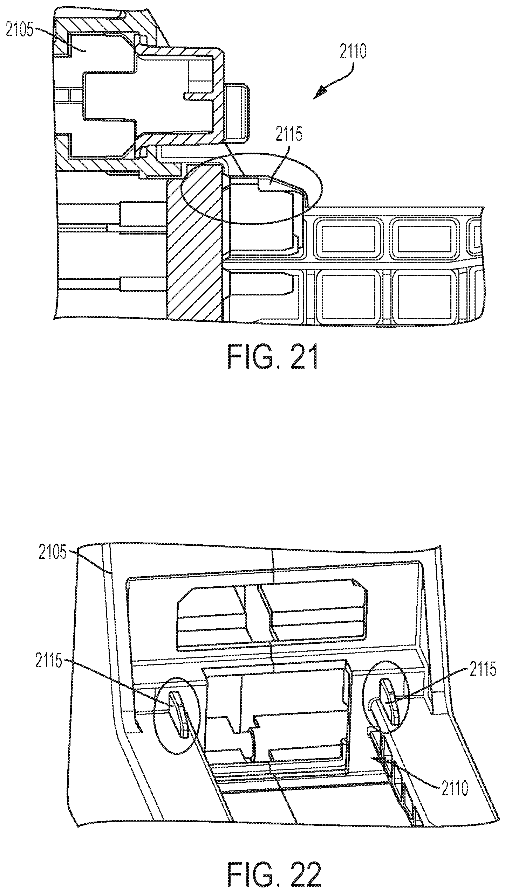

In some embodiments, additional support structures are added to the device housing and the battery pack housing 105. FIGS. 21-22 illustrate a device housing 2105 including a terminal block portion 2110. The terminal block portion 2110 includes ribs 2115 positioned outside each side surface of the device terminal block 900.

Referring to FIG. 17, the pack housing 105 is constructed to accommodate the ribs 2115. Cutouts 2120 in the pack housing 105 receive the ribs 2115 when the battery pack is attached to the electrical device.

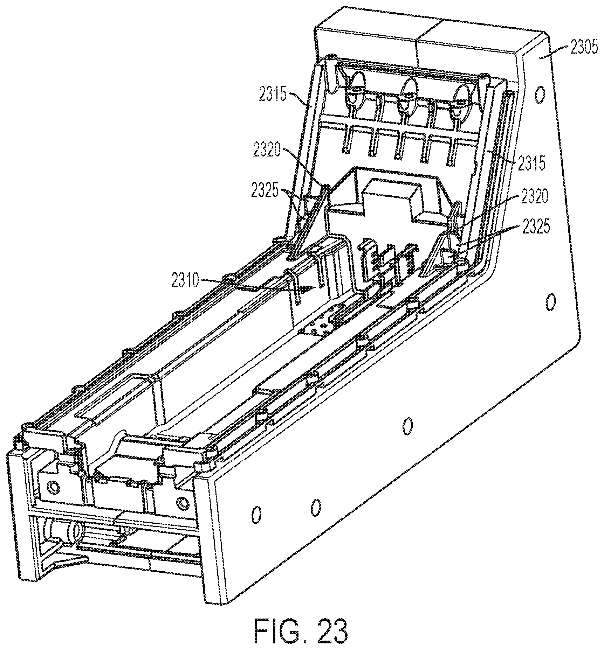

FIG. 23 illustrates another embodiment of a device housing 2305 including a terminal block portion 2310. The device housing 2305 includes side surface ribs 2315 on either side (that is, a first side and a second side) of the housing 2305. Support ribs 2320 are positioned on either side of the terminal block portion 2310. The illustrated support ribs 2320 are provided on an inside portion compared to the side surface ribs 2315 on the device housing 2305.

Additional connection ribs 2325 are positioned between the support ribs 2320 and the side surface ribs 2315. The connection ribs 2325 connect the support ribs 2320 to the side surface ribs 2315 to support the support ribs 2320. The rib arrangement including the side surface ribs 2315, the support ribs 2320, and the connection ribs 2325 provide additional support to the terminal block portion 2310 to, for example, protect against damage during drops or during handling of the electrical devices.

Thus, the invention may provide, among other things, a battery pack terminal configuration. The configuration may include a low-power terminal and/or a row of one or more communication terminals spaced from a row of power terminals. The invention may provide a battery pack including a low power circuit operable to provide a reduced voltage from all of the battery cells of the battery pack to the powered electrical device. The invention may provide a terminal (e.g., a male blade terminal) with terminal support structure (e.g., a wing, one or more ribs, etc.).

One or more independent features and/or independent advantages of the invention may be set forth in the claims.

## Claims

1. A battery pack (100) comprising:
a housing (105);
a plurality of battery cells (305) supported by the housing, the plurality of battery cells collectively providing a discharge output;
a plurality of terminals including a positive power terminal (205), a negative power terminal (210), a low power terminal (220) and a communication terminal (225, 230, 235, 240), the communication terminal being electrically connected to a controller of the battery pack and operable to communicate between the controller and an external device;
a low power circuit (320) connecting the plurality of battery cells to the low power terminal and the negative terminal to output a first voltage; and
a power circuit connecting the plurality of battery cells to the positive power terminal and the negative terminal to output a second voltage, the second voltage being greater than the first voltage,
wherein the discharge output is provided to the power circuit and the low power circuit,
wherein the low power circuit includes a transformer configured to reduce the discharge output to the first voltage,
wherein a connection path including the low-power circuit and connecting the plurality of battery cells to the low power terminal is independent of the power circuit.

2. The battery pack (100) of claim 1, wherein the first voltage is about 5 V, and optionally, wherein the second voltage is about 80 V.

3. The battery pack (100) of claim 1, wherein the first voltage powers a device controller (1010).

4. The battery pack (100) of claim 1, wherein the second voltage is 80 V.

5. The battery pack (100) of claim 1, wherein the transformer includes one selected from a group consisting of a step down transformer and a low dropout regulator.

6. The battery pack (100) of claim 1, wherein the controller (310) is operable to control the battery pack to selectively output the first voltage and the second voltage,
and optionally, wherein the communication terminal is isolated from the positive power terminal (205) and the negative power terminal (210),
and further optionally, wherein the housing (105) includes a terminal block (115) supporting the plurality of terminals, the positive power terminal and the negative terminal being arranged in a first row, the communication terminal being arranged in a second row spaced from the first row.

7. The battery pack of any of claims 1-3, 5, and 6, wherein the low power circuit includes a low-power mode and a high-power mode, wherein the low-power mode provides a quiescent current when the battery pack is in a sleep state, wherein the high power output is enabled during normal discharge operations.

8. A method of operating a battery-powered device (1000) with a battery pack (100), the device including a device housing (2105, 2305), a load (1020) supported by the device housing, and a device controller (1010) supported by the device housing, the battery pack including a pack housing (105), and a plurality of battery cells (305) supported by the pack housing, the method comprising:
providing, using the plurality of battery cells, a discharge output, wherein the plurality of battery cells collectively provide the discharge output;
reducing, using a low power circuit including a transformer, the discharge output to a first voltage;
supplying the first voltage from the plurality of battery cells to the device to power the device controller; and
supplying a second voltage from the plurality of battery cells to the device to power the device.

9. The method of claim 8, wherein supplying a first voltage includes supplying about 5 V, and optionally, wherein supplying a second voltage includes supplying about 80 V.

10. The method of claim 8, further comprising with a controller (310), controlling the battery pack to selectively supply the first voltage and the second voltage.

11. The method of any of claims 7, 9, and 10, further comprising:
operating the low power circuit in a low power mode to provide a quiescent current when the battery pack is in a sleep state; and
enabling a high power mode of the low power circuit during normal discharge operations.

12. An electrical combination comprising:
an electrical device (1000) including
a device housing (2105, 2305),
a load (1020) supported by the device housing,
a device controller (1010) supported by the device housing, and
a plurality of device terminals including a device positive power terminal (905), a device negative terminal (910), and a device low power terminal (920); and
a battery pack (100) including
a pack housing (105),
a plurality of battery cells (305) supported by the pack housing, the plurality of battery cells collectively providing a discharge output,
a plurality of pack terminals including a pack positive power terminal (205) electrically connectable to the device positive power terminal, a pack negative power terminal (210) electrically connectable to the device negative terminal, a pack low power terminal (220) electrically connectable to the device low power terminal and a pack communication terminal (225, 230, 235, 240), the pack communication terminal being electrically connected to a pack controller of the battery pack and operable to communicate between the pack controller and an external device (1000),
a low power circuit (320) connecting the plurality of battery cells to the low power terminal and the pack negative terminal to output a first voltage to power the device controller, and
a power circuit connecting the plurality of battery cells to the pack positive power terminal and the pack negative terminal to output a second voltage to power the load, the second voltage being greater than the first voltage,
wherein the discharge output is provided to the power circuit and the low power circuit,
wherein the low-power circuit includes a transformer configured to reduce the discharge output to the first voltage, and
wherein a connection path including the low-power circuit and connecting the plurality of battery cells to the low power terminal is independent of the power circuit.

13. The electrical combination of claim 12, wherein the first voltage is about 5 V, and optionally, wherein the second voltage is about 80 V.

14. The electrical combination of claim 12, wherein the battery pack (100) includes the pack controller (310) operable to control the battery pack to selectively output the first voltage and the second voltage,
or wherein the pack communication terminal is isolated from the pack positive power terminal (205) and the pack negative power terminal (210),
and optionally, wherein the pack housing (105) includes a pack terminal block (115) supporting the plurality of pack terminals, the pack positive power terminal and the pack negative terminal being arranged in a first row, the pack communication terminal being arranged in a second row spaced from the first row.

15. The electrical combination of any of claims 12, 13 and 14, wherein the low power circuit includes a low-power mode and a high-power mode, wherein the low-power mode provides a quiescent current when the battery pack is in a sleep state, wherein the high power output is enabled during normal discharge operations.

## Patentansprüche

1. Batteriepack (100), umfassend:
ein Gehäuse (105);
eine Vielzahl von Batteriezellen (305), die vom Gehäuse gestützt werden, wobei die Vielzahl von Batteriezellen gemeinsam eine Entladeleistung bereitstellen;
eine Vielzahl von Anschlüssen, die einen positiven Stromanschluss (205), einen negativen Stromanschluss (210), einen Niedrigstromanschluss (220) und einen Kommunikationsanschluss (225, 230, 235, 240) beinhalten, wobei der Kommunikationsanschluss elektrisch mit einer Steuereinheit des Batteriepacks verbunden ist und zum Kommunizieren zwischen der Steuereinheit und einer externen Vorrichtung betreibbar ist;
eine Niedrigstromschaltung (320), die die Vielzahl von Batteriezellen mit dem Niedrigstromanschluss und dem negativen Anschluss verbindet, um eine erste Spannung auszugeben; und
eine Stromschaltung, die die Vielzahl von Batteriezellen mit dem positiven Stromanschluss und dem negativen Anschluss verbindet, um eine zweite Spannung auszugeben, wobei die zweite Spannung größer ist als die erste Spannung,
wobei der Entladeausgang der Stromschaltung und der Niedrigstromschaltung bereitgestellt wird,
wobei die Niedrigstromschaltung einen Transformator beinhaltet, der dazu konfiguriert ist, den Entladeausgang auf die erste Spannung zu reduzieren,
wobei ein Verbindungspfad, der die Niedrigstromschaltung beinhaltet und die Vielzahl von Batteriezellen mit dem Niedrigstromanschluss verbindet, unabhängig von der Stromschaltung ist.

2. Batteriepack (100) nach Anspruch 1, wobei die erste Spannung etwa 5 V beträgt und wobei optional die zweite Spannung etwa 80 V beträgt.

3. Batteriepack (100) nach Anspruch 1, wobei die erste Spannung eine Vorrichtungssteuereinheit (1010) mit Strom versorgt.

4. Batteriepack (100) nach Anspruch 1, wobei die zweite Spannung 80 V beträgt.

5. Batteriepack (100) nach Anspruch 1, wobei der Transformator einen Transformator eines beinhaltet, ausgewählt aus einer Gruppe bestehend aus einem Abwärtstransformator und einem Low-Dropout-Regler.

6. Batteriepack (100) nach Anspruch 1, wobei die Steuereinheit (310) betreibbar ist, um das Batteriepack so zu steuern, dass es selektiv die erste Spannung und die zweite Spannung ausgibt,
und wobei optional der Kommunikationsanschluss vom positiven Stromanschluss (205) und vom negativen Stromanschluss (210) isoliert ist,
und wobei das Gehäuse (105) weiter optional einen Anschlussblock (115) beinhaltet, der die Vielzahl von Anschlüssen stützt, wobei der positive Stromanschluss und der negative Anschluss in einer ersten Reihe angeordnet sind, wobei der Kommunikationsanschluss in einer zweiten Reihe angeordnet ist, die von der ersten Reihe beabstandet ist.

7. Batteriepack nach einem der Ansprüche 1-3, 5 und 6, wobei die Niedrigstromschaltung einen Niedrigstrommodus und einen Hochstrommodus beinhaltet, wobei der Niedrigstrommodus einen Ruhestrom bereitgestellt, wenn sich der Batteriepack in einem Schlafzustand befindet, und wobei der Hochstromausgang während normaler Entladevorgänge aktiviert ist.

8. Verfahren zum Betreiben einer batteriebetriebenen Vorrichtung (1000) mit einem Batteriepack (100), wobei die Vorrichtung ein Vorrichtungsgehäuse (2105, 2305), eine vom Vorrichtungsgehäuse gestützte Last (1020) und eine vom Vorrichtungsgehäuse gestützte Vorrichtungssteuereinheit (1010) beinhaltet, wobei der Batteriepack ein Packgehäuse (105) und eine Vielzahl von vom Packgehäuse gestützten Batteriezellen (305) beinhaltet, wobei das Verfahren umfasst:
Bereitstellen, unter Verwendung einer Vielzahl von Batteriezellen, eines Entladeausgangs, wobei die Vielzahl von Batteriezellen gemeinsam eine Entladeleistung bereitstellen;
Reduzieren, unter Verwendung einer Niedrigstromschaltung, die einen Transformator beinhaltet, des Entladeausgangs auf eine erste Spannung;
Zuführen der ersten Spannung von der Vielzahl von Batteriezellen zu der Vorrichtung, um die Vorrichtungssteuereinheit mit Strom zu versorgen; und
Zuführen einer zweiten Spannung von der Vielzahl von Batteriezellen zu der Vorrichtung, um die Vorrichtung mit Strom zu versorgen.

9. Verfahren nach Anspruch 8, wobei Zuführen einer ersten Spannung ein Zuführen von etwa 5 V beinhaltet, und wobei optional Zuführen einer zweiten Spannung ein Zuführen von etwa 80 V beinhaltet.

10. Verfahren nach Anspruch 8, ferner umfassend, mit einer Steuereinheit (310), Steuern des Batteriepacks, selektiv die erste Spannung und die zweite Spannung zuzuführen.

11. Verfahren nach einem der Ansprüche 7, 9 und 10, weiter umfassend:
Betreiben der Niedrigstromschaltung in einem Niedrigstrommodus, um einen Ruhestrom bereitzustellen, wenn sich der Batteriepack in einem Schlafzustand befindet; und
Aktivieren eines Hochstrommodus der Niedrigstromschaltung während normaler Entladevorgänge.

12. Elektrische Kombination, umfassend:
eine elektrische Vorrichtung (1000), beinhaltend
ein Vorrichtungsgehäuse (2105, 2305),
eine Last (1020), die vom Vorrichtungsgehäuse gestützt wird,
eine Vorrichtungssteuereinheit (1010), die vom Vorrichtungsgehäuse gestützt wird, und
eine Vielzahl von Vorrichtungsanschlüssen, beinhaltend einen positiven Vorrichtungsstromanschlusses (905), einen negativen Vorrichtungsanschluss (910) und einen Vorrichtungsniedrigstromanschluss (920); und
ein Batteriepack (100), beinhaltend
ein Packgehäuse (105),
eine Vielzahl von Batteriezellen (305), die vom Packgehäuse gestützt werden, wobei die Vielzahl von Batteriezellen gemeinsam eine Entladeleistung bereitstellen,
eine Vielzahl von Packanschlüssen, die einen positiven Packstromanschluss (205), der elektrisch mit dem positiven Vorrichtungsstromanschluss verbunden werden kann, einen negativen Stromanschluss (210), der elektrisch mit dem negativen Vorrichtungsanschluss verbunden werden kann, einen Packniedrigstromanschluss (220), der elektrisch mit dem Vorrichtungsniedrigstromanschluss und einem Packkommunikationsanschluss (225, 230, 235, 240) verbunden werden kann, beinhalten, wobei der Packkommunikationsanschluss elektrisch mit einer Packsteuereinheit des Batteriepacks verbunden ist und zum Kommunizieren zwischen der Packsteuereinheit und einer externen Vorrichtung (1000) betreibbar ist,
eine Niedrigstromschaltung (320), die die Vielzahl von Batteriezellen mit dem Niedrigstromanschluss und dem negativen Packanschluss verbindet, um eine erste Spannung auszugeben, um die Vorrichtungssteuereinheit mit Strom zu versorgen, und
eine Stromschaltung, die die Vielzahl von Batteriezellen mit dem positiven Packstromanschluss und dem negativen Packanschluss verbindet, um eine zweite Spannung auszugeben, um die Last mit Strom zu versorgen, wobei die zweite Spannung größer ist als die erste Spannung,
wobei der Entladeausgang der Stromschaltung und der Niedrigstromschaltung bereitgestellt wird,
wobei die Niedrigstromschaltung einen Transformator beinhaltet, der dazu konfiguriert ist, den Entladeausgang auf die erste Spannung zu reduzieren, und
wobei ein Verbindungspfad, der die Niedrigstromschaltung beinhaltet und die Vielzahl von Batteriezellen mit dem Niedrigstromanschluss verbindet, unabhängig von der Stromschaltung ist.

13. Elektrische Kombination nach Anspruch 12, wobei die erste Spannung etwa 5 V beträgt und wobei optional die zweite Spannung etwa 80 V beträgt.

14. Elektrische Kombination nach Anspruch 12, wobei der Batteriepack (100) die Packsteuereinheit (310) beinhaltet, die betreibbar ist, um den Batteriepack so zu steuern, dass er selektiv die erste Spannung und die zweite Spannung ausgibt,
oder wobei der Kommunikationsanschluss vom positiven Packstromanschluss (205) und vom negativen Packstromanschluss (210) isoliert ist,
und wobei das Packgehäuse (105) optional einen Packanschlussblock (115) beinhaltet, der die Vielzahl von Packanschlüssen stützt, wobei der positive Packstromanschluss und der negative Packanschluss in einer ersten Reihe angeordnet sind, wobei der Packkommunikationsanschluss in einer zweiten Reihe angeordnet ist, die von der ersten Reihe beabstandet ist.

15. Elektrische Kombination nach einem der Ansprüche 12, 13 und 14, wobei die Niedrigstromschaltung einen Niedrigstrommodus und einen Hochstrommodus beinhaltet, wobei der Niedrigstrommodus einen Ruhestrom bereitgestellt, wenn sich der Batteriepack in einem Schlafzustand befindet, und wobei der Hochstromausgang während normaler Entladevorgänge aktiviert ist.

## Revendications

1. Bloc-batterie (100) comprenant :
un boîtier (105) ;
une pluralité de cellules de batterie (305) supportées par le boîtier, la pluralité de cellules de batterie fournissant collectivement une sortie de décharge ;
une pluralité de bornes incluant une borne d'alimentation positive (205), une borne d'alimentation négative (210), une borne basse puissance (220) et une borne de communication (225, 230, 235, 240), la borne de communication étant connectée électriquement au dispositif de commande du bloc-batterie et permettant une communication entre le dispositif de commande et un dispositif externe ;
un circuit basse puissance (320) connectant la pluralité de cellules de batterie à la borne basse puissance et à la borne négative pour émettre une première tension ; et
un circuit d'alimentation connectant la pluralité de cellules de batterie à la borne d'alimentation positive et à la borne négative pour émettre une seconde tension, la seconde tension étant supérieure à la première tension,
dans lequel la sortie de décharge est fournie au circuit d'alimentation et au circuit basse puissance,
dans lequel le circuit basse puissance inclut un transformateur configuré pour réduire la sortie de décharge à la première tension,
dans lequel un chemin de connexion incluant le circuit basse puissance et connectant la pluralité de cellules de batterie à la borne basse puissance est indépendant du circuit d'alimentation.

2. Bloc-batterie (100) selon la revendication 1, dans lequel la première tension est d'environ 5 V, et facultativement, dans lequel la seconde tension est d'environ 80 V.

3. Bloc-batterie (100) selon la revendication 1, dans lequel la première tension alimente un dispositif de commande de dispositif (1010).

4. Bloc-batterie (100) selon la revendication 1, dans lequel la seconde tension est de 80 V.

5. Bloc-batterie (100) selon la revendication 1, dans lequel le transformateur inclut un transformateur sélectionné parmi un groupe constitué d'un transformateur abaisseur et d'un régulateur à faible chute de tension.

6. Bloc-batterie (100) selon la revendication 1, dans lequel le dispositif de commande (310) permet de commander le bloc-batterie pour émettre sélectivement la première tension et la seconde tension,
et facultativement dans lequel la borne de communication est isolée de la borne de puissance positive (205) et de la borne de puissance négative (210),
et facultativement en outre dans lequel le boîtier (105) inclut un bornier (115) supportant la pluralité de bornes, la borne d'alimentation positive et la borne négative étant agencées dans une première rangée, la borne de communication étant agencée dans une seconde rangée espacée de la première rangée.

7. Bloc-batterie selon l'une quelconque des revendications 1-3, 5 et 6, dans lequel le circuit basse puissance inclut un mode basse puissance et un mode haute puissance, dans lequel le mode basse puissance fournit un courant de repos lorsque le bloc-batterie est dans un état de veille, dans lequel la sortie haute puissance est activée pendant des opérations de décharge normales.

8. Procédé de fonctionnement d'un dispositif alimenté par batterie (1000) avec un bloc-batterie (100), le dispositif incluant un boîtier de dispositif (2105, 2305), une charge (1020) supportée par le boîtier de dispositif et un dispositif de commande de dispositif (1010) supporté par le boîtier de dispositif, le bloc-batterie incluant un boîtier de bloc (105) et une pluralité de cellules de batterie (305) supportées par le boîtier de bloc, le procédé comprenant :
la fourniture, en utilisant la pluralité de cellules de batterie, d'une sortie de décharge, dans lequel la pluralité de cellules de batterie fournit collectivement la sortie de décharge ;
la réduction, en utilisant un circuit basse puissance incluant un transformateur, de la sortie de décharge à une première tension ;
la fourniture de la première tension à partir de la pluralité de cellules de batterie au dispositif pour alimenter le dispositif de commande de dispositif ; et
la fourniture d'une seconde tension à partir de la pluralité de cellules de batterie au dispositif pour alimenter le dispositif.

9. Procédé selon la revendication 8, dans lequel la fourniture d'une première tension inclut la fourniture d'environ 5 V et facultativement dans lequel la fourniture d'une seconde tension inclut la fourniture d'environ 80 V.

10. Procédé selon la revendication 8, comprenant en outre un dispositif de commande (310) commandant le bloc-batterie pour fournir sélectivement la première tension et la seconde tension.

11. Procédé selon l'une quelconque des revendications 7, 9 et 10, comprenant en outre :
le fonctionnement du circuit basse puissance dans un mode basse puissance pour fournir un courant de repos lorsque le bloc-batterie est dans un état de veille ; et
l'activation d'un mode haute puissance du circuit basse puissance pendant des opérations de décharge normales.

12. Combinaison électrique, comprenant :
un dispositif électrique (1000) incluant
un boîtier de dispositif (2105, 2305),
une charge (1020) supportée par le boîtier de dispositif,
un dispositif de commande de dispositif (1010) supporté par le boîtier de dispositif, et
une pluralité de bornes de dispositif incluant une borne de puissance positive de dispositif (905), une borne négative de dispositif (910) et une borne basse tension de dispositif (920) ; et
un bloc-batterie (100) incluant
un boîtier de bloc (105),
une pluralité de cellules de batterie (305) supportées par le boîtier de bloc, la pluralité de cellules de batterie fournissant collectivement une sortie de décharge,
une pluralité de bornes de bloc incluant une borne d'alimentation positive de bloc (205) pouvant être connectée électriquement à la borne de puissance positive de dispositif, une borne d'alimentation négative de bloc (210) pouvant être connectée électriquement à la borne négative de dispositif, une borne basse puissance de bloc (220) pouvant être connectée électriquement à la borne basse puissance de dispositif et une borne de communication de bloc (225, 230, 235, 240), la borne de communication de bloc étant connectée électriquement à un dispositif de commande de bloc du bloc-batterie et permettant une communication entre le dispositif de commande de bloc et un dispositif externe (1000),
un circuit basse puissance (320) connectant la pluralité de cellules de batterie à la borne basse puissance et à la borne négative de bloc pour émettre une première tension pour alimenter le dispositif de commande de dispositif, et
un circuit d'alimentation connectant la pluralité de cellules de batterie à la borne d'alimentation positive de bloc et à la borne négative de bloc pour émettre une seconde tension pour alimenter la charge, la seconde tension étant supérieure à la première tension,
dans lequel la sortie de décharge est fournie au circuit d'alimentation et au circuit basse puissance,
dans lequel le circuit basse puissance inclut un transformateur configuré pour réduire la sortie de décharge à la première tension, et
dans lequel un chemin de connexion incluant le circuit basse puissance et connectant la pluralité de cellules de batterie à la borne basse puissance est indépendant du circuit d'alimentation.

13. Combinaison électrique selon la revendication 12, dans laquelle la première tension est d'environ 5 V, et facultativement, dans lequel la seconde tension est d'environ 80 V.

14. Combinaison électrique selon la revendication 12, dans laquelle le bloc-batterie (100) inclut le dispositif de commande de bloc (310) permettant de commander le bloc-batterie pour émettre sélectivement la première tension et la seconde tension,
ou dans laquelle la borne de communication de bloc est isolée de la borne de puissance positive de bloc (205) et de la borne de puissance négative de bloc (210),
et facultativement dans laquelle le boîtier de bloc (105) inclut un bornier de bloc (115) supportant la pluralité de bornes de bloc, la borne d'alimentation positive de bloc et la borne négative de bloc étant agencées dans une première rangée, la borne de communication de bloc étant agencée dans une seconde rangée espacée de la première rangée.

15. Combinaison électrique selon l'une quelconque des revendications 12, 13 et 14, dans lequel le circuit basse puissance inclut un mode basse puissance et un mode haute puissance, dans lequel le mode basse puissance fournit un courant de repos lorsque le bloc-batterie est dans un état de veille, dans lequel la sortie haute puissance est activée pendant des opérations de décharge normales.
